# FASCICULE DE BREVET EUROPEEN

(11) **EP 3 909 719 B1**
(45) Date de publication et mention de la délivrance du brevet: **06.03.2024**
(21) Numéro de dépôt: 21182158.2
(22) Date de dépôt: 04.10.2019
(51) Int. Cl.: B25B 23/14, B25B 21/02

(54) **CLE A CHOC ELECTRIQUE A MECANISME D'IMPACT REBONDISSANT**
ELEKTROIMPULSSCHRAUBER MIT DRUCKENERGIEABSORPTIONSMECHANISMUS
ELECTRIC SHOCK KEY WITH IMPACT BOUNCE-OFF MECHANISM

(30) Priorité: 05.10.2018 FR 1859247
(43) Date de publication de la demande: 17.11.2021
(62) Demande divisionnaire de: 19201546.9
(73) Titulaire: ETABLISSEMENTS GEORGES RENAULT, 44800 Saint Herblain (FR)
(72) Inventeur: MAHOT, Pierre, 44620 LA MONTAGNE (FR)
(74) Mandataire: Vidon Brevets & Stratégie

(56) Documents cités:
- WO-A1-2011/102559
- FR-A1- 2 974 320
- US-A1- 2016 121 467
- US-A1- 2016 250 738
- US-B2- 7 607 492

## Description

### 1. Domaine de l'invention

Le domaine de l'invention est celui de la conception et de la fabrication des clés à choc. La présente invention se rapporte à une clé à choc selon le préambule de la revendication 1.

### 2. Art antérieur

Les clés à choc sont couramment utilisées dans divers domaines, notamment dans les garages automobiles et pour la maintenance industrielle.

Ces outils sont utilisés principalement pour le démontage de composants mécaniques sur des véhicules ou sur des machines. Ils peuvent également être utilisés pour le montage ou le remontage de certains composants.

Les composants, serrés ou desserrés par l'utilisation des clés à choc, sont plus ou moins propres et/ou oxydés.

En outre, les espaces d'intervention peuvent être exigus, difficiles d'accès et encombrés par d'autres composants potentiellement blessants et mal éclairés.

Les utilisateurs de clés à choc attendent en conséquence de leurs outils qu'ils concourent à limiter l'impact des difficultés mentionnées plus haut.

Ainsi, afin de négliger les difficultés d'utilisation des clés à choc dans les espaces exigus et encombrés, les utilisateurs souhaitent utiliser des outils compacts.

De manière plus générale, les utilisateurs de clés à choc ont des attentes notamment en matière d'ergonomie, d'efficacité, et de durabilité.

En terme d'ergonomie, les utilisateurs souhaitent des outils silencieux, légers et n'induisant le ressentis par l'utilisateur que d'un faible niveau de vibration.

En terme d'efficacité, les utilisateurs souhaitent pouvoir exécuter rapidement des opérations de serrage/desserrage, avec un niveau de qualité convenable (serrage au couple désiré) en bénéficiant d'une bonne visibilité de la zone d'intervention.

Les utilisateurs souhaitent encore des outils autonomes et non contraints par un câble d'alimentation électrique ou un tube d'alimentation en air comprimé.

En terme de durabilité, les utilisateurs souhaitent des outils solides résistant notamment aux chocs et pouvant fonctionner convenablement dans le temps.

On connaît différents types de clés à choc, notamment :
- les clés à choc pneumatiques à mécanisme d'impact rebondissant ;
- les clés à choc électriques à mécanisme d'impact non rebondissant ;
- les clés à choc électriques à mécanisme d'impact rebondissant ;
- les clés à chocs électriques à génération d'impacts par alimentation alternée.

Les clés à choc à mécanisme d'impact rebondissant comprennent un mécanisme d'impact induisant, à chaque impact, un rebond du rotor du moteur dans le sens inverse du sens de travail (sens de vissage ou de dévissage).

Le sens de travail correspond au sens horaire dans le cas du vissage d'une vis ayant un pas à droite, ou dans le sens antihoraire dans le cas du dévissage d'une vis ayant un pas à droite.

Le sens de travail correspond au sens antihoraire dans le cas du vissage d'une vis ayant un pas à gauche, ou dans le sens horaire dans le cas du dévissage d'une vis ayant un pas à gauche.

Au rang de ces clés à choc à mécanisme d'impact rebondissant figurent notamment :
- les mécanismes d'impact de type Maurer : « Twin Hammer », « Twin lobe », « double dogs » en langue anglaise ;
- « single dog » en langue anglaise ;
- « rocking dog » en langue anglaise ;
- « two jaws » en langue anglaise ;
- « pin clutch » en langue anglaise ;

Selon une approche différente, les clés à choc à mécanisme d'impact non rebondissant comprennent, entre leur moteur et le mécanisme d'impact, une chaine cinématique intégrant un élément élastique susceptible de se déformer pour permettre au rotor du moteur de continuer de tourner lorsqu'à chaque impact, la rotation de l'arbre de sortie de la clé à choc est fortement décélérée par l'élément en cours de serrage. L'énergie cinétique accumulée par le rotor à l'issue de chaque impact est restituée à l'impact suivant sous la forme d'énergie potentielle pour transmettre un couple à l'arbre de sorti de la clé à choc.

### Clés à choc pneumatiques à mécanisme d'impact rebondissant

Les documents de brevet US3661217 et US4287956 décrivent des exemples de clés à choc pneumatiques à mécanisme d'impact rebondissant de type Maurer.

Ces clés à choc comprennent un moteur pneumatique muni d'un rotor et d'un stator, un mécanisme d'impact entrainé par le rotor du moteur et un carré de sortie susceptible de coopérer avec un composant à serrer/desserrer.

Le mécanisme d'impact comprend une ou cage entraînée en rotation par le rotor à l'intérieur de laquelle sont fixés mobiles en rotation deux marteaux aptes à entrer en collision avec le carré portant deux enclumes pour générer des chocs.

Pour réaliser une opération de vissage/dévissage, le moteur est alimenté en continu par de l'air comprimé à pression constante entrainant de ce fait en rotation la cage. Au cours de la rotation de la cage, les marteaux sont amenés à venir en collision avec les enclumes. A chaque collision des marteaux contre les enclumes, le mécanisme de frappe transmet dans un choc un couple au carré qui entraine en rotation l'organe à visser/dévisser.

A chaque choc dans le mécanisme d'impact, la chaine cinématique entre le moteur et le carré de sortie se déforme et accumule ainsi de l'énergie potentielle. Cette énergie potentielle est restituée lors de la détente de la chaine cinématique induisant un rebond du mécanisme d'impact dans le sens inverse du sens du travail, c'est-à-dire du sens de l'opération de vissage/dévissage.

Au cours de ce rebond, les marteaux prennent une position désengagée dans laquelle les marteaux ne sont plus en face des enclumes. Les marteaux gardent cette position momentanément lors de la ré-accélération du rotor dans le sens de l'opération. Ainsi, les marteaux passent les enclumes sans les frapper permettant à la cage d'accélérer dans son mouvement de rotation. Après une rotation donnée (de l'ordre d'un tour dans la configuration illustrée) de la cage, les marteaux entrent de nouveau en collision avec les enclumes pour transmettre l'énergie cinétique des pièces en mouvement au carré de sortie.

Les cycles se répètent ainsi pour réaliser jusqu'à son terme l'opération de vissage/dévissage.

Un tel principe de fonctionnement est par exemple décrit en détail dans le document de brevet US 3 661 217.

Il s'agit donc d'un mécanisme d'impact rebondissant du type à désengagement automatique des marteaux vis-à-vis de l'enclume au cours du rebond et en début de ré accélération puis réengagement automatique.

Un tel mécanisme d'impact permet un meilleur équilibrage de l'ensemble réduisant aussi les vibrations par rapport à un simple marteau ou à un mécanisme type « Rocking Dog » en langue anglaise.

Un tel mécanisme d'impact est compact, c'est-à-dire qu'il présente une longueur et un diamètre inférieurs à ceux des autres mécanismes d'impact. Ce mécanisme bénéficie ainsi du meilleur ratio poids/puissance des mécanismes d'impact connus.

Un tel mécanisme d'impact est aussi réputé pour être très durable.

L'inconvénient d'un tel mécanisme d'impact est qu'il ne convient qu'aux outils pneumatiques.

En effet, on a vu qu'après chaque impact, le mécanisme d'impact rebondit. Toutefois, le moteur est alimenté avec une pression d'air constante si bien que le couple qu'il délivre est constant au rendement près. Ainsi, si au cours d'un rebond, le couple délivré par le moteur est inférieur au couple dû au rebond, le moteur ralentit, s'arrête ou tourne en sens inverse.

Si un tel type de fonctionnement est bien supporté par un moteur pneumatique sans détérioration, un moteur électrique le supporte mal au prix d'une détérioration rapide. En effet, un moteur à balais verra ses balais se détériorer s'ils sont sollicités fréquemment dans les deux sens, alors qu'un moteur synchrone à aimants permanents régulé en vitesse sera sujet à des surintensités.

### Clés à choc électriques à mécanisme d'impact non rebondissant

Les documents de brevet US-A1-2016/250738 et US-A1-2016/121467 décrivent deux exemples de clés à chocs électriques à mécanisme d'impact non rebondissant.

Les clés à choc électriques à mécanisme d'impact non rebondissant comprennent un mécanisme d'impact n'induisant, à chaque impact, aucun rebond du rotor du moteur dans le sens inverse du sens de travail (sens de vissage ou de dévissage).

Les mécanismes d'impact non rebondissant sont plus connus sous la dénomination anglaise « spring loading cam ».

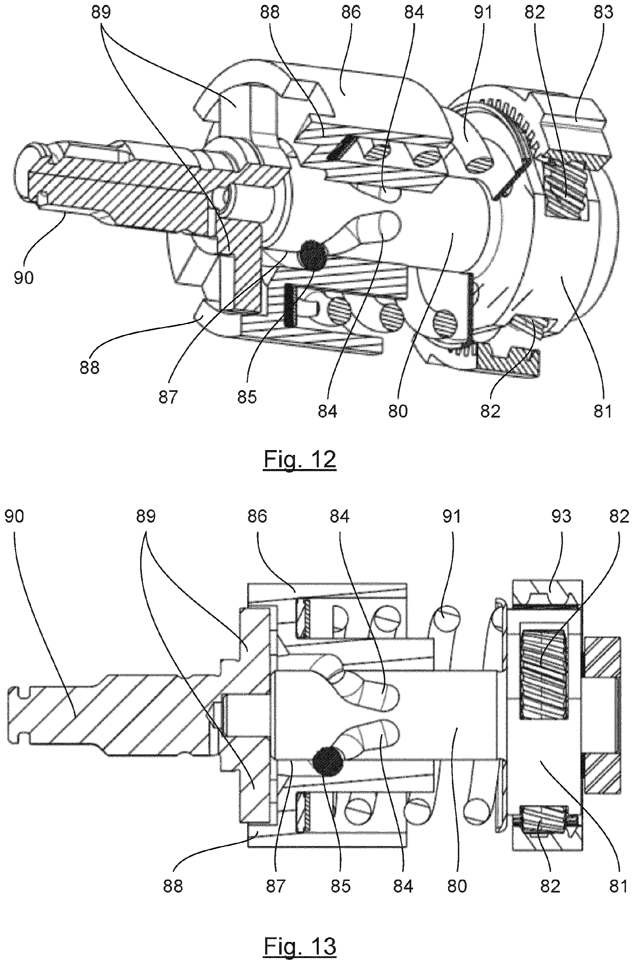

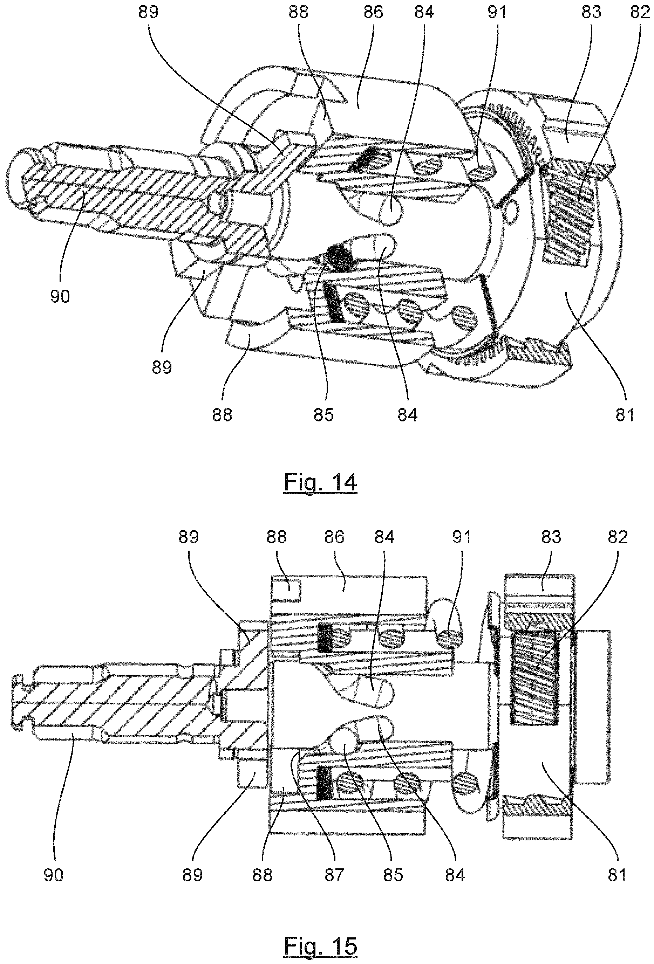

Un exemple de mécanisme de ce type est illustré aux figures 12, 13, 14 et 15.

En référence à ces figures, un tel mécanisme comprend un arbre 80 lié en rotation avec un porte-satellites 81 portant des satellites 82 qui engrènent d'une part avec une couronne 83 montée fixe dans le carter de la clé à choc et d'autre part avec un solaire (non représenté) lié en rotation avec l'arbre du moteur (non représenté) de la clé à choc.

L'arbre 80 présente des rainures hélicoïdales 84 logeant chacune une bille 85.

Le mécanisme comprend une cage 86 montée mobile en rotation et en translation par rapport à l'arbre 80 contre l'effet d'un ressort de compression 91. Tel qu'il sera décrit plus en détail par la suite, la cage 86 peut ainsi se déplacer pour prendre une position embrayée (figures 12 et 13) et une position débrayée (figure 14 et 15).

La cage 86 comprend des rainures 87 logent les billes 85. Elle comprend également des marteaux 88.

Le mécanisme comprend une enclume 89 montée mobile en rotation à l'extrémité de l'arbre 80 et liée en rotation avec le carré de sortie 90 susceptible de coopérer avec un composant à serrer/desserrer.

Au cours d'une opération de vissage/dévissage, des cycles d'impact s'enchainent successivement jusqu'à l'atteinte d'un couple de serrage objectif.

A chaque cycle d'impact, la cage 86 est entrainée en rotation dans le sens du vissage pour accumuler de l'énergie cinétique qu'elle resitue à l'élément à visser sous la forme d'un couple lors de la collision de ses marteaux 88 avec l'enclume 89.

Pour cela, le moteur électrique est alimenté en permanence de sorte que le rotor entraine en rotation l'arbre 80 par l'intermédiaire du train épicycloïdal.

Le vissage d'une vis se déroule classiquement en deux étapes :
- le pré-vissage, durant lequel la tête de la vis n'est pas en contact avec la pièce à fixer si bien que la vis n'oppose pas de couple résistant, et
- le vissage, qui se déroule entre le moment où la tête de la vis vient au contact de l'assemblage jusqu'à l'atteinte du couple objectif, et au cours duquel la vis oppose un couple résistant.

Au cours de l'étape de pré-vissage, le ressort 91 de compression maintient la cage 86 en position embrayée et le mécanisme tourne d'un seul tenant entrainant la vis jusqu'à ce que sa tête entre en contact avec la pièce à fixer.

A ce stade, l'étape de vissage débute et la vis commence à opposer un couple résistant, la rotation de la cage 86 étant stoppée par les enclumes portées par l'arbre de sortie.

L'arbre 80 entrainé par le moteur via le train épicycloïdal continue de tourner et du fait des rainures hélicoïdales 84 et des billes 85, la cage se déplace en translation vers le moteur, en comprimant ainsi le ressort, pour atteindre sa position débrayée.

Durant ce mouvement de translation, les marteaux 88 portés par la cage 86 se désengagent des enclumes 89. Lorsque le désengagement est complet, la cage 86 peut tourner en glissant sur les enclumes 89 puis lorsque les marteaux 88 ont dépassé les enclumes 89, la cage 86 se déplace vers l'arbre de sortie sous l'effet de poussée du ressort 91.

Le mouvement de la cage 86 suit alors la trajectoire permise par les rainures hélicoïdales 84 et les billes 85, ce faisant la cage 86 acquiert une énergie cinétique de rotation qui est transférée à l'arbre de sortie et à la vis lorsqu'à la fin de la trajectoire de la cage 86 les marteaux viennent heurter les enclumes 89.

Les cycles d'impacts s'enchainent ainsi jusqu'à ce que l'utilisateur considère le vissage suffisant.

Ce mécanisme d'impact « non rebondissant » évite à chaque impact le rebond du rotor du moteur, et ainsi l'arrêt ou l'entrainement du moteur en sens inverse de l'opération en cours. Le moteur peut ainsi fonctionner en mode stabilisé, ce qui rend ce type de mécanisme d'impact tout particulièrement compatible avec les moteurs électriques qui nécessitent de fonctionner de manière stabilisée pour ne pas subir de casse ou un vieillissement prématuré.

Par ailleurs, les clés à choc de ce type présentent l'avantage d'être portatives et particulièrement maniables en particulier lorsqu'elles sont alimentées par une batterie embarquée.

Un mécanisme d'impact de ce type a pour inconvénient qu'il lui faut suffisamment de couple pour compresser le ressort. Il est donc important pour son bon fonctionnement que le moteur soit couplé à la cage via une réduction généralement du type à train(s) épicycloïdal (aux).

L'utilisation d'une réduction ainsi que l'utilisation du ressort dans ce mécanisme provoquent :
- une augmentation de la masse de l'outil (réduction) ;
- une augmentation de la longueur (réduction + ressort).

Compte tenu que le fonctionnement d'un tel mécanisme induit le déplacement oscillant en translation de la cage suivant la direction de l'axe du moteur, un tel mécanisme induit des vibrations longitudinales perçues par l'utilisateur.

De ce point de vue, le mécanisme Maurer décrit précédemment ne présente pas cet inconvénient.

### Clés à choc électriques à mécanisme d'impact rebondissant

Les clés à choc électriques à mécanisme d'impact rebondissant, comprennent, comme les clés à choc pneumatiques à mécanisme d'impact rebondissant, un mécanisme d'impact induisant, à chaque impact, un rebond du rotor du moteur dans le sens inverse du sens de travail (sens de vissage ou de dévissage).

Les clés à choc électriques à mécanisme d'impact rebondissant présentent les avantages des clés à choc pneumatiques et des clés à choc électriques à mécanisme d'impact non rebondissant sans en présenter les inconvénients :
- la compacité et le faible poids des mécanismes à impact rebondissant, en particulier du mécanisme Maurer ;
- l'absence de vibration longitudinale d'un mécanisme à impact rebondissant ;
- la liberté d'utilisation d'un outil à batterie.

Le document de brevet US-B2-7 607 492 décrit une clé à choc de ce type et selon le préambule de la revendication 1 comprenant un moteur électrique entrainant de manière directe un mécanisme d'impact de type Maurer.

Ainsi que cela a été expliqué plus haut, un mécanisme d'impact de type rebondissant induit un rebond du rotor du moteur rendant sa mise en oeuvre incompatible avec un moteur électrique sauf à le détériorer rapidement.

En effet, les moteurs électriques sont classiquement régulés en vitesse.

Les moyens de contrôle du moteur comprennent des moyens de régulation qui à partir d'une consigne régule le fonctionnement du moteur de manière à maintenir la vitesse du moteur aussi proche que possible de la consigne de vitesse prédéterminée.

Au cours d'un rebond du mécanisme d'impact, le rotor du moteur tourne dans le sens inverse de celui pour lequel il est alimenté. Toutefois, pour tenter de maintenir la vitesse de rotation du moteur proche de la consigne de vitesse, le système de régulation du moteur pourrait augmenter de façon très importante le courant d'alimentation au-delà de ce que le système peut supporter.

Le mécanisme de type Maurer est un mécanisme rebondissant qui provoque donc de très fortes variations de vitesse à l'inverse d'un mécanisme non rebondissant de type « spring loaded cam » qui lui a de faibles variations de vitesse du moteur, ce qui rend le premier impropre à une mise en oeuvre au sein d'un outil électrique.

Le document US-B2-7 607 492 décrit toutefois une solution pour limiter ce problème.

Cette solution consiste à détecter le rebond du mécanisme d'impact en surveillant le sens de rotation du mécanisme d'impact puis, chaque fois qu'un rebond est détecté, à couper l'alimentation dans le sens de l'opération de vissage/dévissage en cours ou à alimenter le moteur dans le sens du rebond pour maitriser l'angle de rebond et ainsi ménager le système.Les inconvénients qui résultent de ce type de pilotage moteur sont les suivants :
- le couple électromagnétique délivré par le moteur est en variation permanente et ceci accroit la sensation de vibration par l'utilisateur ;
- la complexité du pilotage du moteur oblige à observer le sens de rotation du moteur en temps réel pour détecter le rebond en utilisant un capteur optique fragile ;
- l'usage d'un mécanisme de restitution d'énergie dont la durabilité peut s'avérer courte (un tel mécanisme met en effet en oeuvre une roue libre et un ressort qui sont par nature des composants relativement fragiles) ;
- le niveau de performance est inférieur à celui d'un outil muni d'un moteur pneumatique compte tenu que l'alimentation du moteur n'est pas permanente tout le long d'une opération de vissage/dévissage.

### Clés à choc électriques à génération d'impacts par alimentation alternée

Le document de brevet FR-A1-2 974 320 décrit une clé à génération d'impacts par alimentation alternée.

Les clés à chocs de ce type présentent l'architecture classique d'une visseuse dite à serrage continu, c'est-à-dire d'une visseuse classique permettant de réaliser le serrage d'une vis sans génération d'impact moyennant une alimentation continue du moteur au cours du vissage.

Ces clés à chocs n'intègrent donc pas de mécanisme d'impact du type de ceux décrit plus haut.

Selon une approche différente, ces clés à chocs exploitent le jeu dans la transmission pour générer des impacts résultant d'une alimentation du moteur par des impulsions de courant électrique. Ce principe est décrit en détail dans le document mentionné plus haut.

Ainsi, une visseuse de ce type, qui ne serait pas alimentée par des impulsions de courant électrique, ne permettrait pas de réaliser un vissage à impact mais un vissage continu.

Le document de brevet WO-A1-2011/102559 décrit un autre type de clé à chocs électrique à génération d'impacts par alimentation alternée au cours de la mise en oeuvre de laquelle le moteur est alimenté périodiquement dans le sens inverse de l'opération en cours de sorte à ramener le marteau dans une position de recul dans laquelle il se trouve éloigné de l'enclume avant d'être accéléré pour mettre en contact le marteau et l'enclume puis pour entrainer en rotation l'arbre de sortie.

Ainsi, une visseuse de ce type, qui ne serait pas alimentée par des impulsions de courant électrique, ne permettrait pas de réaliser un vissage à impact mais un vissage continu. Ceci vient du fait que contrairement aux mécanismes d'impact rebondissant du type à désengagement automatique puis réengagement automatique, les marteaux ne se désengagent pas des enclumes au cours du rebond et de la ré-accélération. En effet, dans le cadre de l'utilisation d'une visseuse de ce type avec une alimentation continue (et non par impulsions), les pièces de la chaîne de transmission restent en contact les unes des autres après le premier impact si bien que la visseuse se comporte comme une visseuse à serrage continu.

### Conclusion sur l'art antérieur

Au final, le mécanisme d'impact non rebondissant entraîné par un moteur électrique est lourd et encombrant. De plus les déplacements axiaux de la cloche amènent l'outil à vibrer fortement.

L'utilisation d'un mécanisme à impact rebondissant de type Maurer en entrainement direct au sein d'un outil électrique avec rupture d'alimentation du moteur lors des impacts nécessite une architecture mécanique et de régulation complexe. De plus, les variations de courant produisent des variations du couple électromoteur et donc des variations de couple de réaction dans la poignée. Ces variations de couple sont perçues comme des vibrations de l'outil pour l'utilisateur.

Il existe donc une opportunité d'améliorer les clés à choc électriques à mécanisme d'impact rebondissant.

La présente invention concerne spécifiquement le domaine des clés à chocs électriques à mécanisme d'impact rebondissant qu'elle se propose d'améliorer.

### 3. Objectifs de l'invention

L'invention a notamment pour objectif d'apporter une solution efficace à au moins certains de ces différents problèmes.

En particulier, selon au moins un mode de réalisation, un objectif de l'invention est d'optimiser les clés à choc électriques intégrant un mécanisme d'impact rebondissant.

Notamment, l'invention a pour objectif, selon au moins un mode de réalisation, de fournir une clé à choc électriques intégrant un mécanisme d'impact rebondissant qui soit simple de conception et/ou simple à mettre en oeuvre.

En particulier, un objectif de l'invention est de fournir, dans au moins un mode de réalisation, une telle clé à choc qui présente une technique de régulation du moteur qui soit simple et permette de préserver de manière efficace l'intégrité du moteur et du système de commande.

Un autre objectif de l'invention est, selon au moins un mode de réalisation, de fournir une telle clé à choc qui soit légère et/ou compacte et/ou induise un faible niveau de vibrations perçues par l'utilisateur.

### 4. Présentation de l'invention

Pour ceci, l'invention propose une clé à choc, selon la revendication 1, comprenant :
- un moteur électrique comprenant un rotor et un stator ;
- un mécanisme d'impact de type rebondissant ;
- des moyens de contrôle de l'alimentation dudit moteur comprenant des moyens de régulation du courant d'alimentation dudit moteur ;
ledit rotor dudit moteur étant relié directement audit mécanisme d'impact.

Selon l'invention, lesdits moyens de contrôle de l'alimentation dudit moteur sont configurés pour délivrer auxdits moyens de régulation, au cours d'une opération de vissage ou de dévissage, une consigne de courant d'alimentation dudit moteur induisant la génération par ledit moteur d'un couple électromagnétique prédéterminé.

Ainsi, l'invention repose sur la mise en oeuvre d'une clé à choc électrique à mécanisme d'impact rebondissant dont le moteur est régulé en couple, ou plus particulièrement en courant, et non plus en vitesse.

Le fait de réguler le moteur en couple (en courant) et non plus en vitesse permet d'éviter qu'au cours du rebond du mécanisme rebondissant, la régulation du moteur tendent à maintenir sa vitesse constante en augmentant sa tension d'alimentation avec le risque que le système se bloque en se mettant en sécurité lorsque le courant d'alimentation dépasse un seuil limite acceptable.

Selon l'invention, lesdits moyens de contrôle de l'alimentation dudit moteur sont configurés pour alimenter ledit moteur dans le sens du travail y compris au cours du rebond du mécanisme d'impact rebondissant.

Dans le cadre d'une opération de vissage comprenant au moins une interruption d'alimentation de courant, il est possible que l'énergie cinétique accumulée par le rotor génère un impact et donc un rebond hors alimentation. Le maintien de l'alimentation en cours de rebond mentionnée plus haut ne concerne pas ce type de rebonds hors alimentation puisque par définition ils se produiraient à un instant auquel l'alimentation est coupée.

Selon l'invention, ledit moteur est un moteur multi-phases synchrones à aimants permanents et lesdits moyens de contrôle de l'alimentation dudit moteur utilisant une commande de type vectorielle.

Selon une caractéristique possible, lesdits moyens de régulation comprennent un régulateur et un onduleur relié à une source de tension, ledit régulateur comprenant une entrée apte à recevoir une consigne Ref d de courant d'alimentation, ladite consigne de courant Ref d générant un flux dans ledit moteur, et une entrée apte à recevoir une consigne Ref q de courant d'alimentation induisant la génération par ledit moteur d'un couple électromagnétique.

Selon une caractéristique possible, ladite consigne Ref d est nulle.

Selon une caractéristique possible, lesdits moyens de contrôle de l'alimentation dudit moteur comprennent des moyens de détermination de ladite consigne de courant d'alimentation en temps réel.

Selon une caractéristique possible, ledit onduleur comprend une Modulation de Largeur d'Impulsion (MLI).

Selon une caractéristique possible, une clé à choc selon l'invention comprend des moyens de mesure de la position angulaire dudit rotor et des moyens de mesure des moyens de mesure de courant(s) échangé(s) entre ledit moteur et ledit onduleur, ledit régulateur étant configuré pour :
- recevoir ladite consigne de courant d'alimentation prédéterminée, le signal représentatif de la position angulaire dudit rotor provenant des moyens de mesure de la position angulaire dudit rotor et le ou les signaux provenant desdits moyens de mesure de courant(s) échangé(s) entre ledit onduleur et le moteur,
- calculer une consigne de tension d'alimentation ;
- délivrer ladite consigne de tension d'alimentation audit l'onduleur de manière telle que ce dernier alimente le moteur avec des courants permettant la génération dudit couple électromagnétique proportionnelle à ladite consigne de courant d'alimentation prédéterminée.

Selon une caractéristique possible, ladite consigne de courant d'alimentation induisant la génération par ledit moteur d'un couple électromagnétique est prédéterminé en fonction du temps.

Selon une caractéristique possible, ladite consigne de courant d'alimentation est configuré pour induire une évolution dudit couple électromagnétique prédéterminé selon l'une des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long ladite opération de vissage ou de dévissage,
- ladite opération de vissage ou de dévissage comprend au moins deux phases de durées prédéterminées, ladite consigne de courant d'alimentation étant configuré pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

Selon une caractéristique possible, ladite consigne de courant d'alimentation est configurée pour induire une évolution dudit couple électromagnétique prédéterminé selon l'une ou la combinaison de plusieurs des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

Selon une caractéristique possible, la clé à choc comprend une gâchette de démarrage et les moyens de détermination de ladite consigne de courant d'alimentation en temps réel comprennent des moyens de mesure du temps écoulé depuis l'appui sur ladite gâchette de démarrage.

Selon une caractéristique possible, une clé à choc selon l'invention comprend des moyens de sélection par l'utilisateur :
- du sens de travail de la clé à choc en vissage ou dévissage ;
- de la loi;
- du niveau de puissance.

Selon une caractéristique possible, lesdits moyens de détermination du courant d'alimentation en temps réel utilisent :
- une mesure du temps écoulé depuis l'appui sur la gâchette ;
- le type de travail sélectionné par l'utilisateur, vissage ou dévissage ;
- la loi sélectionnée par l'utilisateur ;
- le niveau de puissance sélectionné par l'utilisateur.

L'invention concerne également un procédé de vissage/dévissage au moyen d'une clé à choc à moteur électrique selon la revendication 1 et selon l'une quelconque des variantes précédentes comprenant une étape de vissage ou de dévissage, ladite étape de vissage ou de dévissage comprenant une étape de contrôle de l'alimentation dudit moteur de type à commande vectorielle comprenant une étape de délivrance auxdits moyens de régulation d'une consigne de courant d'alimentation induisant la génération par ledit moteur d'un couple électromagnétique prédéterminé, ledit moteur étant alimenté dans le sens du travail y compris au cours du rebond du mécanisme d'impact rebondissant.

Selon une caractéristique possible, ladite consigne de courant comprend une consigne Ref d de courant d'alimentation générant un flux dans ledit moteur, et une consigne Ref q de courant d'alimentation induisant la génération par ledit moteur d'un couple électromagnétique.

Selon une caractéristique possible, ladite consigne Ref d est nulle.

Selon une caractéristique possible, ladite étape de contrôle de l'alimentation comprend une Modulation de Largeur d'Impulsion (MLI).

Selon une caractéristique possible, un procédé selon l'invention comprend une étape de détermination de ladite consigne de courant d'alimentation en temps réel.

Selon une caractéristique possible, ladite clé à choc comprend des moyens de régulation comprenant un régulateur et un onduleur relié à une source de tension, ledit procédé comprenant une mesure de la position angulaire dudit rotor et une mesure de courant(s) échangé(s) entre ledit moteur et ledit onduleur, ledit procédé comprenant :
- la réception par ledit onduleur de ladite consigne de courant d'alimentation prédéterminée, du signal représentatif de la position angulaire dudit rotor et le ou les signaux représentatifs de courant(s) échangé(s) entre ledit onduleur et le moteur,
- le calcul d'une consigne de tension d'alimentation ;
- la délivrance de ladite consigne de tension d'alimentation audit l'onduleur de manière telle que ce dernier alimente le moteur avec des courants permettant la génération dudit couple électromagnétique proportionnelle à ladite consigne de courant d'alimentation prédéterminée.

Selon une caractéristique possible, ladite consigne de courant d'alimentation induisant la génération par ledit moteur d'un couple électromagnétique est prédéterminée en fonction du temps.

Selon une caractéristique possible, ladite consigne de courant d'alimentation est configurée pour induire une évolution dudit couple électromagnétique prédéterminé selon l'une des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long ladite opération de vissage ou de dévissage,
- ladite opération de vissage ou de dévissage comprend au moins deux phases de durées prédéterminées, ladite consigne de courant d'alimentation étant configuré pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

Selon une variante possible, ladite consigne de courant d'alimentation est configurée pour induire une évolution dudit couple électromagnétique prédéterminé selon l'une ou la combinaison de plusieurs des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

Selon une caractéristique possible, un procédé selon l'invention comprend une étape de mesure du temps écoulé depuis l'appui sur la gâchette de démarrage de ladite clé à choc.

Selon une caractéristique possible, un procédé selon l'invention comprend une étape de sélection par l'utilisateur :
- du sens de travail de la clé à choc en vissage ou dévissage ;
- de la loi;
- du niveau de puissance.

Selon une caractéristique possible, un procédé selon l'invention comprend une étape de détermination de ladite consigne de courant d'alimentation en temps réel en tenant compte :
- de la mesure du temps écoulé depuis l'appui sur la gâchette ;
- du type de travail sélectionné par l'utilisateur, vissage ou dévissage ;
- de la loi sélectionnée par l'utilisateur ;
- du niveau de puissance sélectionné par l'utilisateur.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

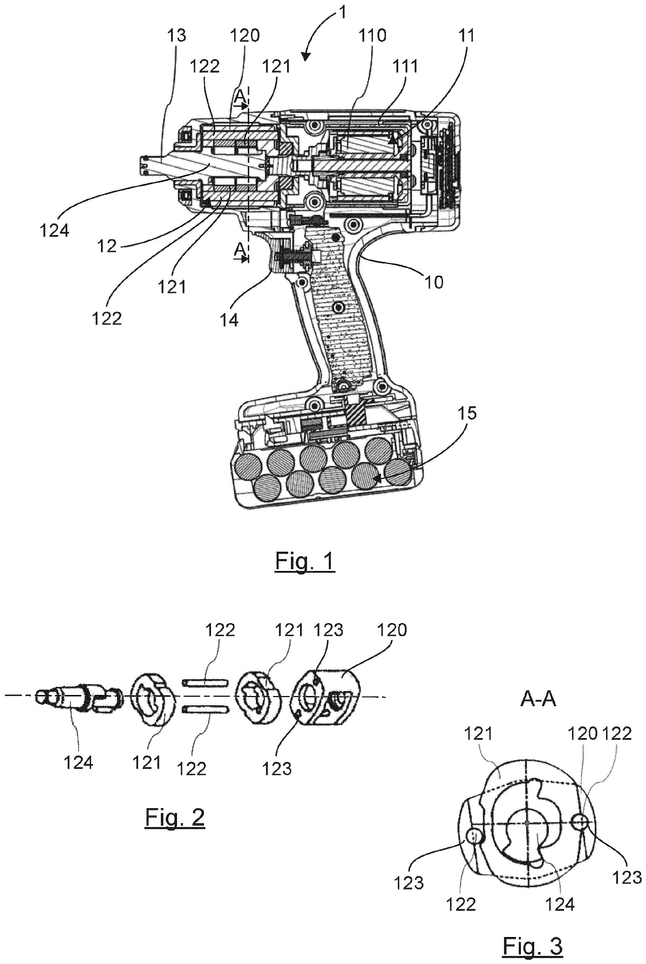

- la figure 1 illustre une vue en coupe transversale d'une clé à choc selon l'invention ;
- la figure 2 est une vue éclatée d'un exemple de mécanisme d'impact pouvant être intégré à une clé à choc selon l'invention ;
- la figure 3 illustre une vue en coupe selon le plan A-A du mécanisme d'impact e la clé à choc de la figure 1 ;

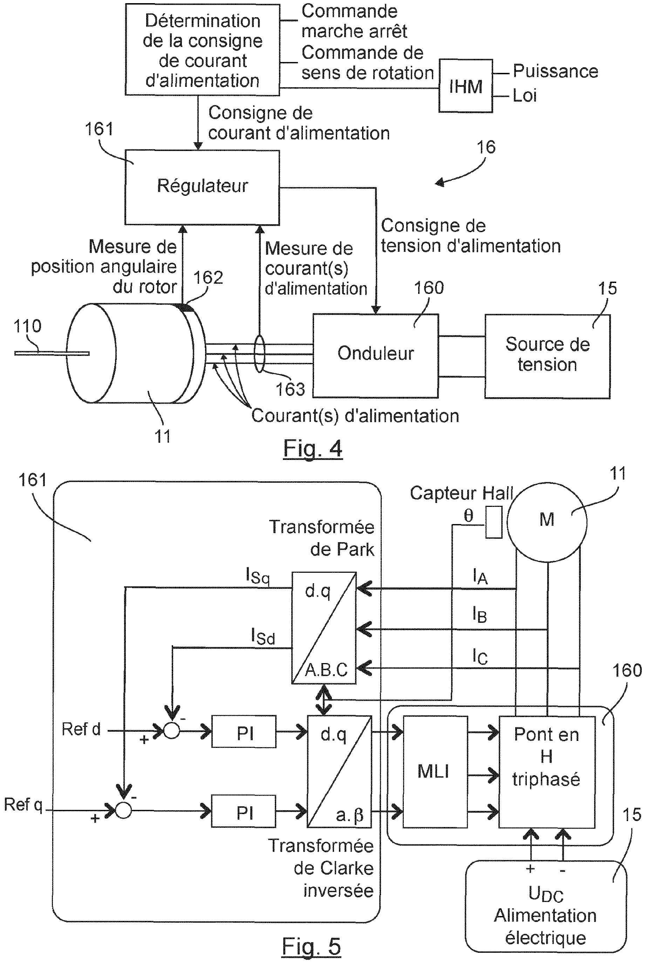

- la figure 4 est une représentation schématique d'un exemple de moyens de contrôle selon l'invention ;
- la figure 5 illustre un exemple de commande vectorielle d'un moteur électrique ;

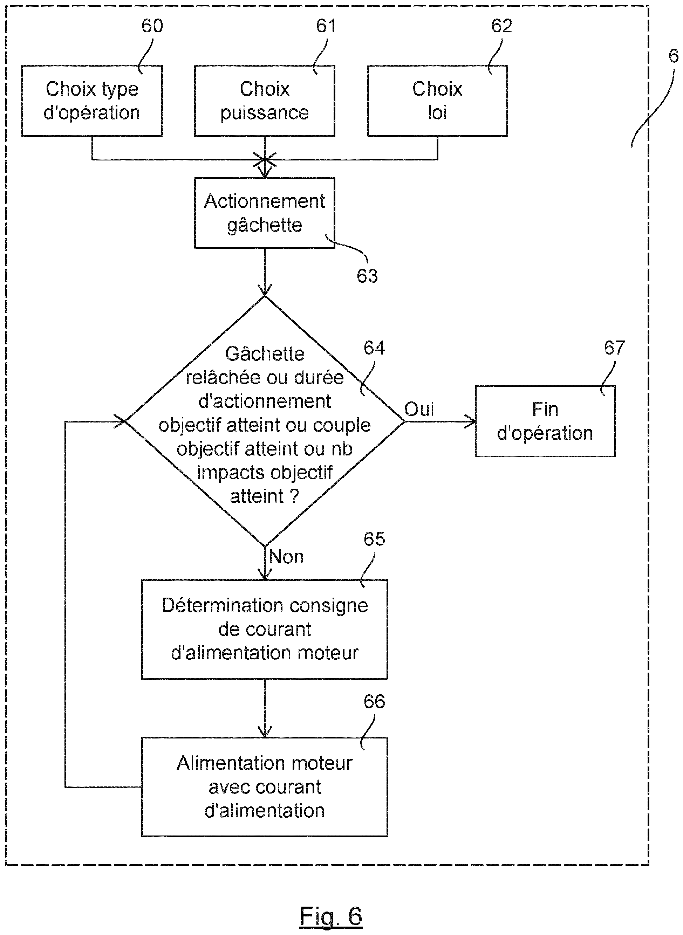

- la figure 6 représente un logigramme illustrant différentes phases d'un procédé selon l'invention ;

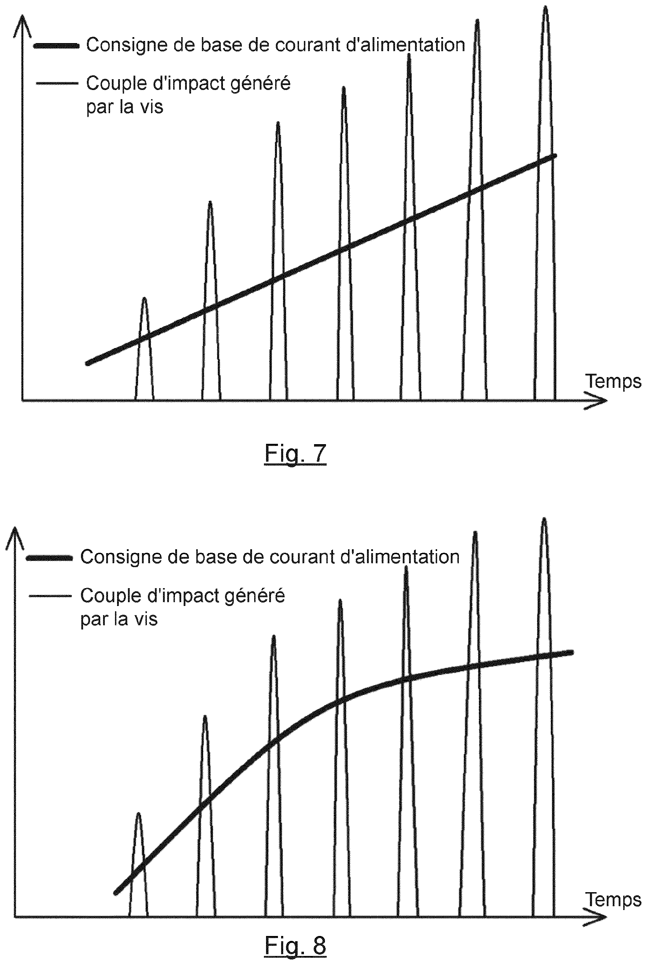

- les figures 7, 8, 9, 10 et 11 illustrent la variation au cours du temps des impacts de couple délivrés par la clé à chocs et de la consigne de courant d'alimentation du moteur au cours d'une opération de vissage selon trois stratégies consistant respectivement :
   - à faire varier le couple électromagnétique de manière croissante suivant une fonction linéaire prédéterminée en fonction du temps tout au long de l'opération de vissage;
   - à faire varier le couple électromagnétique de manière croissante suivant une fonction polynomiale prédéterminée en fonction du temps tout au long de l'opération de vissage;
   - à faire varier le couple électromagnétique de manière décroissante suivant une fonction linéaire prédéterminée en fonction du temps tout au long de l'opération de dévissage;
   - à maintenir constant le couple électromagnétique tout au long ladite opération de vissage ou de dévissage ;
   - lorsque l'opération de vissage ou de dévissage comprend au moins deux phases de durées prédéterminées, à ne délivrer aucun couple électromagnétique entre les phases et à faire évoluer le couple électromagnétique selon l'une des lois précédentes au cours des phases.
- les figures 12 à 15 illustrent un exemple de mécanisme d'impact non rebondissant selon l'art antérieur;

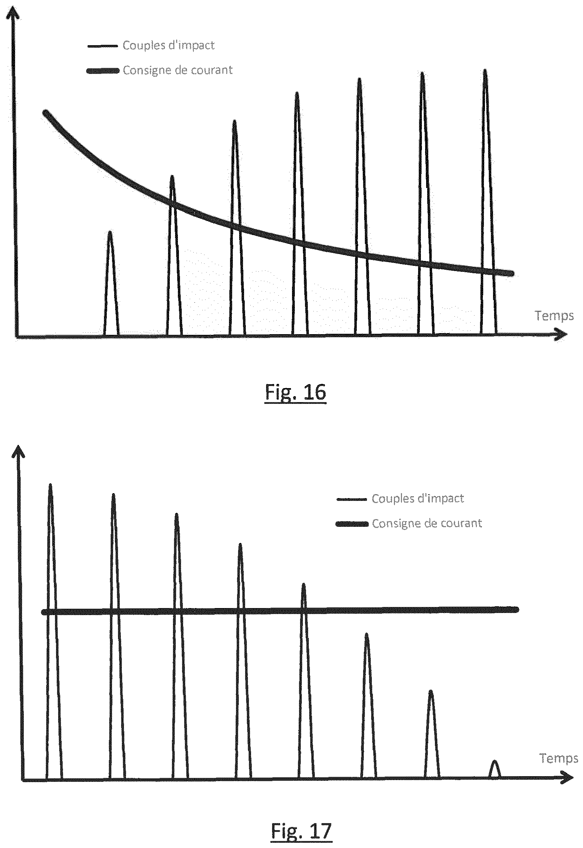

- les figures 16 à 26 illustrent la variation au cours du temps des impacts de couple délivrés par la clé à chocs et de la consigne de courant d'alimentation du moteur r au cours d'une opération de vissage selon d'autres lois.

### 6. Description de modes de réalisation particuliers

### 6.1. Architecture

On présente en relation avec les figures 1 à 5 un exemple de clé à choc 1 selon l'invention.

Une telle clé à choc 1 comprend un carter 10 logeant un moteur électrique 11, un mécanisme d'impact 12 et un organe de sortie rotatif 13 prévu pour coopérer avec une douille de vissage/dévissage. La clé à choc comprend une gâchette d'actionnement 14.

Le moteur 11 comprend un rotor 111 et un stator 110. Il s'agit d'un moteur électrique. Le moteur est de type synchrone à aimants permanents. Il est multi-phasé.

Le rotor 111 est relié directement à l'entrée du mécanisme d'impact 12. En d'autre terme, le rapport de transmission entre le rotor et l'entrée du mécanisme d'impact 12 est égal à 1.

Le mécanisme d'impact 12 est du type rebondissant. Ainsi que cela va ressortir plus clairement par la suite, il s'agit ici d'un mécanisme d'impact rebondissant de type Maurer. Il pourrait toutefois s'agit de tout autre mécanisme d'impact rebondissant comme par exemple, et de manière non limitative :
- « single dog » en langue anglaise ;
- « rocking dog » en langue anglaise ;
- « two jaws » en langue anglaise ;
- « pin clutch » en langue anglaise ;
- bloc hydraulique;

Le mécanisme d'impact 12 comprend une cage 120 mobile en rotation en prise directe avec le rotor 111 auquel elle est liée en rotation.

La cage 120 est évidée et loge deux marteaux 121 solidarisés à celle-ci de manière mobile en rotation autour d'axes sensiblement parallèles à l'axe de rotation de la cloche au moyen de goupilles 122 emmanchées dans des trous 123 ménagés à cet effet dans la cloche 120.

Le mécanisme d'impact 12 comprend un carré de sortie 124, s'étendant en partie à l'intérieur des marteaux 121 et de la cloche 120. Le carré de sortie 124 est lié en rotation avec l'organe de sortie rotatif 13.

De manière classique, la cloche 120 entrainée en rotation de façon directe par le moteur 11 déplace les marteaux 121 qui pivotent autour des goupilles 122 et viennent cogner simultanément contre des enclumes liées à l'arbre de sortie 124 pour transmettre l'énergie cinétique contenue dans les pièces en mouvement (rotor 111, cage 120, marteaux 121) au carré de sortie 124 dans des chocs et entrainer celui-ci en rotation. Après être entrés en collision avec l'enclume, les marteaux, la cage et le rotor rebondissent dans le sens inverse de l'opération en cours. Au cours de ce rebond, les marteaux prennent une position désengagée dans laquelle les marteaux ne sont plus en face des enclumes. Les marteaux gardent cette position momentanément lors de la ré accélération du rotor dans le sens de l'opération. Ainsi, les marteaux passent les enclumes sans les frapper permettant à la cage d'accélérer dans son mouvement de rotation. Après une rotation donnée (de l'ordre d'un tour dans la configuration illustrée) de la cage, les marteaux entrent de nouveau en collision avec les enclumes pour transmettre l'énergie cinétique des pièces en mouvement au carré de sortie. Un tel principe de fonctionnement est par exemple décrit en détail dans le document de brevet US 3 661 217.

Il s'agit donc d'un mécanisme d'impact rebondissant du type à désengagement automatique des marteaux vis-à-vis de l'enclume au cours du rebond et en début de ré accélération puis réengagement automatique.

De manière générale, un mécanisme d'impact rebondissant comprend :
- un volant d'inertie (ici par la cage 120) ;
- des enclumes (liées au carré de sortie 124) ;
- un dispositif de connexion mécanique entre le volant d'inertie et l'enclume (ici les marteaux 121).

La clé à choc comprend une batterie 15, pour alimenter le moteur 11 en courant électrique. Dans des variantes, la clé à choc pourra ne pas comprendre de batterie mais un câble de raccordement au secteur ou de raccordement à un contrôleur lui-même relié au secteur. Le secteur pourra par exemple être un réseau de distribution alternatif redressé. La batterie, le contrôleur ou le secteur constituent une source de tension électrique.

La clé à choc comprend des moyens de contrôle 16 de l'alimentation du moteur 11. Ces moyens de contrôle 16 comprennent des moyens de régulation du courant d'alimentation du moteur.

Les moyens de contrôle 16 de l'alimentation du moteur sont configurés pour délivrer aux moyens de régulation une consigne de courant d'alimentation induisant la génération par le moteur d'un couple électromagnétique prédéterminé.

Plus précisément, ces moyens de contrôle de l'alimentation du moteur 16 comprennent :
- des moyens de détermination en temps réel d'une consigne de courant d'alimentation ;
- les moyens de régulation du courant d'alimentation du moteur.

Ces moyens de régulation du courant d'alimentation du moteur comprennent :
- un régulateur recevant la consigne de courant d'alimentation provenant des moyens de détermination et la traduisant en une consigne de tension d'alimentation ;
- un onduleur recevant la consigne de tension d'alimentation et alimentant le moteur, en fonction de cette consigne, avec un courant d'alimentation du moteur.

Les moyens de régulation permettent d'assurer que le courant d'alimentation du moteur soit aussi proche que possible de la consigne de courant d'alimentation.

Autrement dit, les moyens de contrôle 16 de l'alimentation du moteur 11 sont configurés pour délivrer au régulateur, au cours d'une opération de vissage ou de dévissage, une consigne de courant d'alimentation sur la base de laquelle le régulateur transmet à l'onduleur une consigne de tension d'alimentation. Sur la base de cette consigne de tension d'alimentation, l'onduleur alimente le moteur avec un courant d'alimentation induisant la génération par le moteur d'un couple électromagnétique prédéterminé proportionnel à la consigne de courant d'alimentation. De manière préférée, la consigne de courant d'alimentation induisant la génération par ledit moteur d'un couple électromagnétique est prédéterminée en fonction du temps.

Les moyens de contrôle 16 de l'alimentation du moteur sont ici configurés pour délivrer au régulateur, au cours d'une opération de vissage ou de dévissage, une consigne de courant d'alimentation induisant la génération par le moteur d'un couple électromagnétique évoluant selon différentes lois.

Les lois représentées aux figures 7 à 11 représentent l'évolution en fonction du temps d'une consigne de base du courant d'alimentation induisant le couple électromagnétique du moteur.

Le couple électromagnétique du moteur étant proportionnel au courant d'alimentation induisant ledit couple électromagnétique, la forme de cette loi est donc représentative de la variation en fonction du temps souhaitée pour le couple électromagnétique du moteur au cours d'un vissage ou dévissage.

Ces lois exprimant ladite consigne de base du courant d'alimentation sont établies de la façon suivante :
- l'évolution du couple électromagnétique en fonction du temps est déterminée de façon expérimentale pour obtenir une progression du vissage ou dévissage optimum, puis sur cette base,
- connaissant le coefficient de proportionnalité entre le couple électromagnétique et le courant d'alimentation, l'évolution en fonction du temps du courant d'alimentation est calculée,
- il en découle ainsi de façon directe ladite loi représentative de la consigne de courant d'alimentation, image dudit courant souhaité,
- une plage de coefficients multiplicateurs applicable à cette consigne de base est choisie, ceci pour moduler la puissance de vissage ou dévissage en fonction du souhait de l'utilisateur.

Le coefficient de proportionnalité entre le couple électromagnétique et le courant d'alimentation induisant ledit couple dépend des paramètres de conception du moteur et peut être mesuré expérimentalement.

Les moyens de détermination de la consigne de courant d'alimentation sont préférentiellement configurés pour déterminer en temps réel la consigne de courant d'alimentation générant le couple électromagnétique en fonction :
- du sens de l'opération : vissage ou dévissage ;
- de la loi sélectionnée par l'utilisateur exprimée comme une variation au cours du temps d'une consigne de base de courant d'alimentation générant le couple électromagnétique ;
- éventuellement de la puissance de la clé à choc sélectionnée par l'utilisateur.

Les moyens de détermination de la consigne de courant d'alimentation peuvent par exemple classiquement comprendre un automate programmable ou un microprocesseur associé à une ou plusieurs mémoires et captable d'exécuter un programme conçu pour déterminer la consigne de courant d'alimentation. Tout autre moyen équivalent pourra être mis en oeuvre dans ce but.

Le sens de l'opération détermine le signe de la consigne de courant d'alimentation générant le couple électromagnétique, par exemple positif pour un couple souhaité dans le sens horaire et négatif pour un couple souhaité dans le sens antihoraire.

Pour une loi donnée, le choix du niveau de puissance conduit à appliquer un coefficient multiplicateur à la valeur de la consigne de base de courant d'alimentation correspondant à la loi choisie.

Une consigne de courant d'alimentation générant le couple électromagnétique est donc calculée en temps réel de la façon suivante :
- l'appui sur la gâchette déclenche une mesure du temps,
- sur la base d'une fréquence prédéterminée, la valeur de la consigne de base de courant d'alimentation est lue sur la loi choisie,
- cette valeur est le cas échéant multipliée par le coefficient résultant du niveau de puissance choisi,
- un signe est affecté à la valeur obtenue précédemment suivant la nature de l'opération (dévissage ou vissage).

Ainsi sur la base de ladite fréquence, une consigne de courant d'alimentation est calculée et fournie au régulateur en temps réel.

Certaines lois sont illustrées aux figures 7 à 11.

Ces figurent illustrent :
- en traits épais : la variation au cours du temps de la consigne de base de courant d'alimentation générant le couple électromagnétique du moteur, cette consigne étant proportionnelle au couple électromagnétique souhaité ;
- en traits fins : la variation au cours du temps du couple généré par les impacts sur l'élément à visser-dévisser.

Selon une première loi, illustrée à la figure 7, la consigne de courant d'alimentation est configurée pour induire une évolution du couple électromagnétique de manière croissante suivant une fonction linéaire prédéterminée en fonction du temps tout au long de l'opération de vissage. Les courbes représentées sur cette figure illustrent un vissage à courant croissant. Il est possible d'avoir différentes lois de ce type ayant des fonctions linéaires différentes.

Selon une deuxième loi, illustrée à la figure 8, la consigne de courant d'alimentation est configurée pour induire une évolution du couple électromagnétique de manière croissante suivant une fonction polynomiale prédéterminée en fonction du temps tout au long de l'opération de vissage. Les courbes représentées sur cette figure illustrent un vissage à courant à croissance progressive pour limiter la réaction de la visseuse au démarrage. Il est possible d'avoir différentes lois de ce type ayant des fonctions polynomiales différentes.

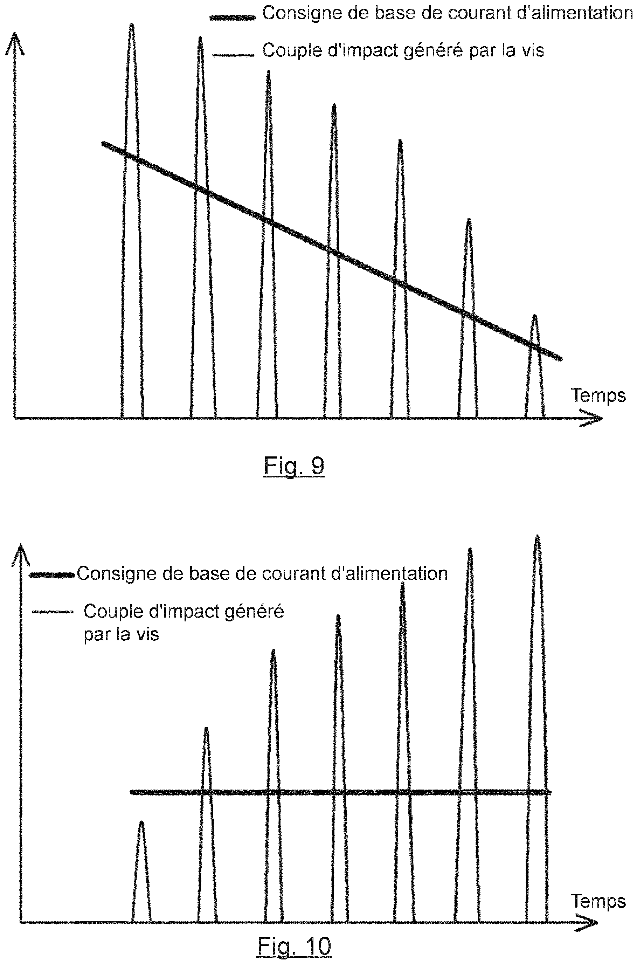

Selon une troisième loi, illustrée à la figure 9, la consigne de courant d'alimentation est configurée pour induire une évolution du couple électromagnétique de manière décroissante suivant une fonction linéaire prédéterminée en fonction du temps tout au long de l'opération de dévissage. Les courbes représentées sur cette figure illustrent un dévissage à courant décroissant. Il est possible d'avoir différentes lois de ce type ayant des fonctions linéaires différentes.

Dans une variante illustrée à la figure 16, la consigne de courant d'alimentation est configurée pour induire une évolution du couple électromagnétique de manière décroissante suivant une fonction polynomiale prédéterminée en fonction du temps tout au long de l'opération de dévissage. Les courbes représentées sur cette figure illustrent un vissage à courant dégressif pour plafonner le couple d'impact. Il est possible d'avoir différentes lois de ce type ayant des fonctions polynomiales différentes.

Selon une quatrième loi, illustrée aux figures 10 et 17, la consigne de courant d'alimentation est configurée pour induire couple électromagnétique constant tout au long ladite opération de vissage ou de dévissage. Les courbes représentées sur la figure 10 illustrent un vissage à courant constant. Les courbes représentées sur la figure 17 illustrent un dévissage à courant constant. Il est possible d'avoir différentes lois de ce type ayant des fonctions linéaires différentes.

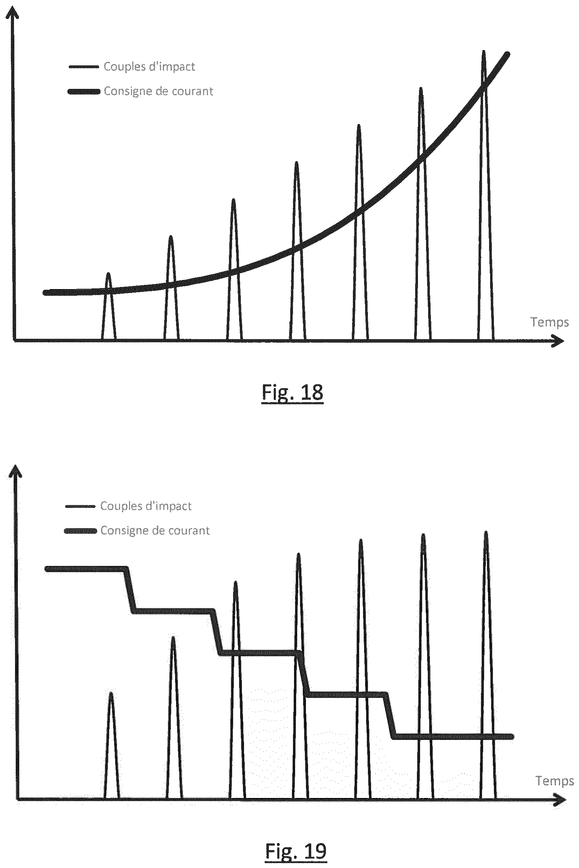

Selon une autre loi, illustrée à la figure 18, la consigne de courant d'alimentation est configurée pour induire une évolution du couple électromagnétique croissant de manière exponentielle tout au long d'une opération de vissage. Les courbes représentées sur cette figure 10 illustrent un courant à croissance progressive exponentielle pour limiter la réaction de la visseuse au démarrage et maintenir une croissance du couple électromagnétique importante entre chaque impact. La consigne de courant d'alimentation pourra être configurée pour induire une évolution du couple électromagnétique décroissant de manière exponentielle tout au long d'une opération de dévissage. Il est possible d'avoir différentes lois de ce type ayant des fonctions exponentielles différentes.

Selon une autre loi, illustrée à la figure 19, la consigne de courant d'alimentation est configurée pour induire une évolution du couple électromagnétique décroissant par paliers tout au long d'une opération de vissage. Ceci permet de limiter le couple de serrage final. La consigne de courant d'alimentation pourra être configurée pour induire une évolution du couple électromagnétique par paliers tout au long d'une opération de dévissage. Il est possible d'avoir différentes lois de ce type ayant des fonctions différentes.

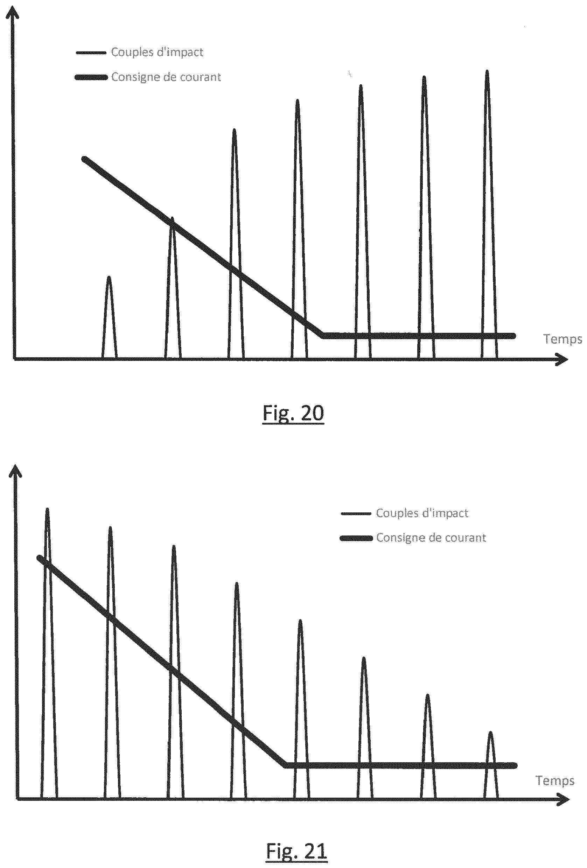

Il est possible de mettre en oeuvre une loi qui soit la combinaison de plusieurs lois différentes. Des exemples de ce type sont mentionnés ci-après en référence aux figures 20 à 23.

Selon une autre loi, illustrée à la figure 20, la consigne de courant d'alimentation est configurée pour induire une évolution du couple électromagnétique décroissante puis constante tout au long d'une opération de vissage. Ceci permet de de réaliser un vissage puisant et rapide au départ puis avec une puissance limitée ensuite. Il est possible d'avoir différentes lois de ce type ayant des fonctions différentes.

Selon une autre loi, illustrée à la figure 21, la consigne de courant d'alimentation est configurée pour induire une évolution du couple électromagnétique décroissante puis constante tout au long d'une opération de dévissage. Ceci permet de rendre régulière la baisse du couple. Il est possible d'avoir différentes lois de ce type ayant des fonctions différentes.

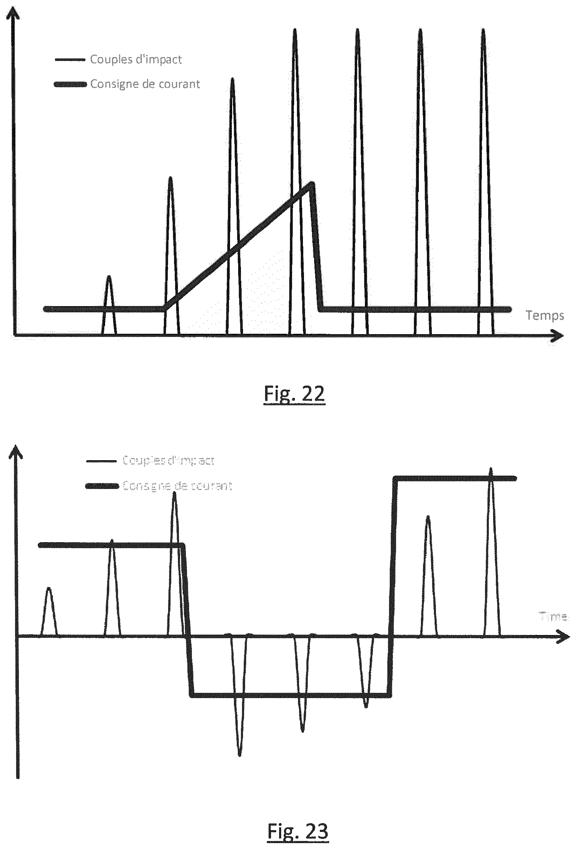

Selon la loi illustrée à la figure 22, la consigne de courant d'alimentation est configurée pour induire une évolution du couple électromagnétique de manière constante, puis croissante et enfin constante tout au long d'une opération de vissage. Ceci permet de réaliser un vissage avec une phase d'approche à faible puissance, une puissance qui augmente ensuite progressivement puis qui retombe pour éviter un sur-vissage.

Selon la loi illustrée à la figure 23, la consigne de courant d'alimentation est configurée pour induire une évolution du couple électromagnétique de manière constante au cours d'un prévissage, puis de manière constante au cours d'un dévissage partiel et enfin de manière constance au cours d'un serrage final pissant.

Ces types de lois discutés plus haut concernent des opérations de vissage ou de dévissage enchainant sans interruption une succession d'impacts jusqu'à l'atteinte d'un couple de serrage objectif, chaque impact étant représenté sur les figures 7 à 10 par un pic.

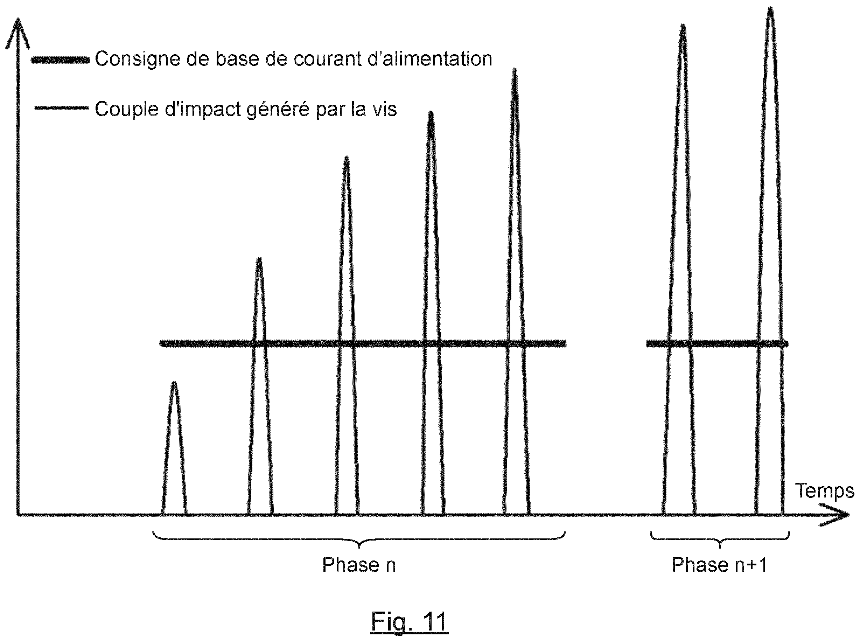

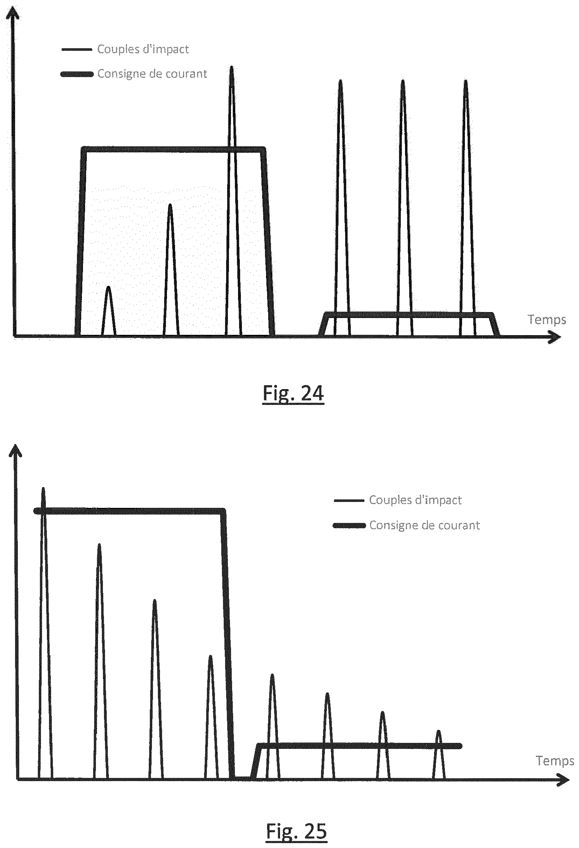

Une opération de vissage ou de dévissage peut de manière alternative comprendre une interruption. Auquel cas, cette opération comporte trois phases de durée(s) prédéterminée(s) : une première et une troisième phases, par exemple selon l'une des lois précédentes ou de la combinaison de plusieurs d'entre-elles, séparées par une seconde phase durant laquelle l'alimentation du moteur est interrompue. Ceci est illustré par les exemples des figures 11 et 24. Ce type de fonctionnement permet de reproduire un usage familier aux opérateurs consistant à la fin d'un vissage à relancer une série d'impact sur la vis pour réaliser un petit vissage après le vissage proprement dit pour s'assurer que le serrage correct.

Ce principe peut-être mis en oeuvre dans le cadre d'un vissage, ainsi que cela vient d'être illustré. Il peut également être mis en oeuvre dans le cadre d'un dévissage comme l'illustre à titre d'exemple la figure 25. Cette figure illustre un dévissage comprenant une première phase de dévissage à courant constant, une phase d'interruption d'alimentation du moteur puis une phase de dévissage à courant constant plus faible. Ceci permet de réaliser un dévissage en deux phases, puissant au départ puis plus faible pour finir et éviter l'éjection de la vis.

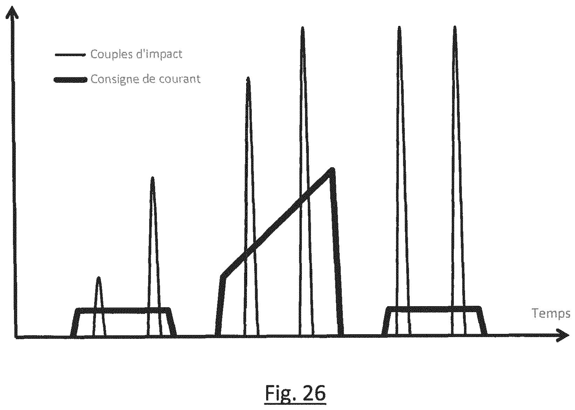

Une opération de vissage ou de dévissage pourra comprendre plusieurs interruptions, par exemple deux ou plus. La figure 26 illustre par exemple une opération de vissage comprenant deux interruptions. Dans cet exemple, la consigne de courant d'alimentation est configurée pour induire une évolution du couple électromagnétique de manière constante, suivie d'une première interruption, suivie d'une évolution croissant de manière linéaire, suivie d'une deuxième interruption suivie d'une évolution constante du couple électromagnétique. Ceci permet de réaliser une opération de vissage avec une approche à faible puissance suivie d'un vissage à puissance croissante puis d'un post-vissage à faible puissance.

Il sera possible d'enregistrer dans la mémoire associée à une clé à choc au moins une loi d'au moins un type, les nombres de lois pour différents types pouvant ne pas être égaux.

Chaque loi pourra être enregistrée sous la forme d'un tableau de valeurs associant à différents instants une valeur de consigne de base de courant d'alimentation.

Ainsi que cela est visible sur les figures 7 à 11, avant, pendant et après chaque impact, le moteur délivre un couple électromagnétique, y compris pendant l'impact, le rebond et l'accélération du rotor. Ainsi, quelle que soit la loi mise en oeuvre, les moyens de contrôle de l'alimentation du moteur sont configurés pour alimenter le moteur dans le sens du travail y compris au cours du rebond du mécanisme d'impact rebondissant. En d'autres termes, le moteur est alimenté en permanence tant que la gâchette est actionnée par l'opérateur en charge de l'opération ou tant que le temps écoulé depuis l'actionnement de la gâchette n'a pas atteint une durée objectif prédéterminée ou tant que le nombre d'impacts dans le mécanisme d'impact n'a pas atteint un nombre d'impact objectif prédéterminé ou tant que le couple de serrage n'a pas atteint un couple de serrage objectif prédéterminé. Les valeurs objectifs sont autrement dit des seuils. La seule interruption d'alimentation du moteur qui puisse se produire est celle entre deux phases successives d'une opération de vissage ou de dévissage comprenant plusieurs phases successives, ceci uniquement sur la base de durées prédéterminées.

Le sens du travail est le sens vissage ou dévissage selon que le travail est un vissage ou un dévissage.

Ainsi que cela a été indiqué plus haut, les moyens de contrôle de l'alimentation du moteur comprennent des moyens de régulation du courant d'alimentation du moteur. Ces moyens de régulation peuvent classiquement comprendre un onduleur 160 alimenté par une source de tension continue (batterie 15, secteur redressé), un régulateur 161, des moyens de mesure 162 de la position angulaire du rotor par rapport au stator, des moyens de mesure 163 de courant(s) échangé(s) entre le moteur 11 et l'onduleur 160, tels qu'un ou plusieurs capteur de courant. La mesure de courant peut par exemple se faire par shunt ou par mesure de champ magnétique ou toute autre technique adaptée.

Le régulateur 161 est configuré pour :
- recevoir une consigne de courant d'alimentation prédéterminée, le signal représentatif de la position angulaire du rotor provenant des moyens de mesure 162 de la position angulaire du rotor et le ou les signaux provenant des moyens de mesure 163 de courant(s) échangé(s) entre l'onduleur et le moteur, et
- calculer une consigne de tension d'alimentation et la délivrer à l'onduleur 160 de sorte que ce dernier alimente le moteur avec un courant d'alimentation électrique.

Plus précisément, le régulateur 161 est configuré pour déterminer une consigne de tension d'alimentation en fonction de la consigne de courant d'alimentation. Le régulateur délivre cette consigne de tension d'alimentation à l'onduleur 160 de manière telle que ce dernier alimente le moteur 11 avec un courant d'alimentation dont l'intensité est proportionnelle à la consigne de courant d'alimentation prédéterminée. Le moteur 11 délivre ainsi un couple électromagnétique prédéterminé proportionnel à la consigne de courant d'alimentation prédéterminée tout pendant qu'un opérateur enfonce la gâchette 14 ou tant que le temps écoulé depuis l'actionnement de la gâchette n'a pas atteint une durée objectif prédéterminée ou tant que le nombre d'impacts dans le mécanisme d'impact n'a pas atteint un nombre d'impact objectif prédéterminé ou tant que le couple de serrage n'a pas atteint un couple de serrage objectif prédéterminé.

L'invention utilise une commande de type vectorielle appliquée aux moteurs multi-phases synchrones à aimants permanents, ce type de commande est bien connue dans l'état de l'art.

Celle-ci permet de piloter le moteur de telle sorte qu'il produise en temps réel un couple électromagnétique proportionnel à une consigne de courant d'alimentation prédéterminée.

Le pilotage d'un moteur synchrone à aimants permanents impose de connaitre la position angulaire du rotor par rapport au stator en temps réel.

Différents type de moyens de mesure 162 de l'angle du rotor pourront être mis en oeuvre.

Ces moyens de mesure d'angle pourront par exemple comprendre un capteur d'angle précis (moins de 60° électriques de définition). Ceci permet une meilleure précision de placement angulaire du courant par rapport au rotor du moteur. Le couple électromoteur est ainsi plus stable et le rendement de transformation de la puissance électrique en puissance mécanique est optimal.

Ces moyens de mesure d'angle pourront par exemple comprendre des capteurs d'angle de type à effet hall tout ou rien. Cette solution permet de simplifier l'intégration des moyens de mesure d'angle. Les capteurs à effet hall peuvent mesurer directement le champ des aimants du rotor. L'impact sur la partie tournante du moteur est donc très faible. En revanche, la position du courant par rapport au rotor n'est pas optimale à tout moment, les performances sont donc moins bonnes qu'avec un capteur d'angle classique.

L'utilisation d'un algorithme associé aux capteurs hall permet d'extrapoler la position du rotor en utilisant la vitesse mesurée par chronométrage des changements d'état des capteurs hall. Ceci permet à la mesure d'angle par capteurs Hall d'obtenir une performance se rapprochant de celle des capteurs plus précis.

Ces moyens de mesure d'angle pourront par exemple déterminer la position angulaire du rotor de manière algorithmique à partir du modèle mathématique du moteur en utilisant uniquement les courants résultants d'un certain jeu de tensions appliquées au moteur. Cette mesure d'angle permet de se passer d'un capteur d'angle. Ceci permet de simplifier encore l'architecture de l'outil. En revanche, la précision de la mesure dépend de la vitesse. Elle ne permet pas toujours d'obtenir de bonnes performances.

Différents modes de commande peuvent être envisagés.

Comme mentionné plus haut, les moyens de contrôle 16 de l'alimentation du moteur utilisent une commande de type vectorielle. Celle-ci permet par l'intermédiaire de transformations mathématiques de changer un système multi-phases en un système continu. Elle permet de réguler très efficacement le couple électromoteur produit par un moteur synchrone.

La figure 5 illustre un exemple parmi d'autres d'une commande vectorielle selon laquelle :
- les boites « PI » correspondent à des correcteurs proportionnelles intégrales ;
- les transformées de Clarke, Park et leurs inverses sont des fonctions mathématiques qui permettent de traduire des grandeurs linéaires en grandeurs non linéaires et inversement ;
- « Ref q » correspond à la consigne de courant d'alimentation générant du couple dans le moteur. C'est le courant proportionnel au couple électromoteur ;
- « Ref d » correspond à la consigne de courant d'alimentation générant du flux. C'est un courant qui permet de moduler le flux magnétique du moteur et donc moduler la relation entre « Ref q » et le couple électromoteur. Cette modulation entraine des pertes dans le circuit magnétique du moteur. On choisit donc généralement « Ref d » = 0 pour minimiser les pertes.

L'invention visant à générer un couple électromoteur prédéterminé, elle concerne tout particulièrement le régulation de la consigne du courant d'alimentation générant le couple électromagnétique.

Le principe de commande vectorielle d'un moteur est connu en soi de l'homme du métier et n'est donc pas décrit plus en détail ici.

D'autres moyens de contrôle de l'alimentation du moteur existent, par exemple une commande de type BLDC (pour BrushLess DC).

Une commande de ce type n'alimente que deux phases d'un moteur triphasé. Ces deux phases sont sélectionnées par rapport à l'état des capteurs hall de la mesure angulaire. La tension est alors simplement modulée pour réguler le courant qui s'écoule entre ces deux phases. L'architecture de l'outil est alors très simple. En revanche le courant ne peut pas être placé à l'angle idéal et la commande n'est donc pas optimum.

Différents mode de régulation peuvent être envisagés.

Le régulateur 161 pourra intégrer un correcteur de type PID bien connu.

Le régulateur 161 pourra en outre intégrer une commande en boucle ouverte en parallèle du correcteur PID. Cette commande basée sur le modèle du moteur permet des réactions plus rapides de la commande lors de variations forte des paramètres. Ce type de commande est appelée « Feedforward » en anglais ce qui pourrait être traduit par pré chargement ou commande en avance.

Une alimentation tout ou rien des deux phases actives d'une commande BLDC est également possible. On alimente jusqu'à ce que le courant atteigne un seuil, on stoppe alors l'alimentation et on la relance après un temps donné ou après que le courant passe en dessous d'un deuxième seuil. Cette méthode produit un courant moyen relativement stable. La structure de la régulation est très simple, mais il y a également une perte de performances.

Le régulateur pourra également intégrer un correcteur de type MRC.

Les modes de commande et de régulation de ces types sont en soit connus de l'homme du métier, avec la particularité d'être mis en oeuvre pour réaliser un pilotage du moteur en courant et non en vitesse comme ceci est le cas de l'art antérieur.

### 6.2. Fonctionnement

Une clé à choc selon l'invention peut être utilisée par un opérateur pour mettre en oeuvre un procédé de vissage/dévissage.

Un tel procédé comprend une étape 6 de vissage/dévissage au cours de laquelle l'organe terminal entraine en rotation une douille coopérant avec un élément à visser/dévisser.

Une étape de vissage ou de dévissage correspond à une opération de vissage mise en oeuvre :
- pendant une durée appréciée par l'opérateur et terminée par un relâchement de la gâchette. ; cette durée peut aussi être prédéterminée auquel cas la clé à choc comprend des moyens de mesure du temps écoulé depuis l'actionnent de la gâchette, les moyens de commande pilotant l'arrêt de la clé à choc de façon automatique lorsque cette durée est écoulée, ou
- jusqu'à ce que le couple de serrage atteigne une valeur de couple objectif prédéterminée. Dans ce cas, la clé à choc peut comporter des moyens de mesure du couple généré par les impacts et de comparaison de ce couple avec un objectif de couple et d'arrêt de la clé à choc lorsque le couple de l'impact est supérieur ou égal à l'objectif, ou encore
- jusqu'à ce que un nombre d'impact ait été généré. Dans ce cas, la clé à choc peut comporter des moyens de comptage des impacts et de comparaison de ce nombre avec un objectif et d'arrêt de la clé à choc lorsque le nombre d'impacts est supérieur ou égal à l'objectif.

Cette opération de vissage ou de dévissage peut comprendre plusieurs phases successives (cf. figure 11) ou non (cf. figure 7 à 10).

Le procédé comprend une étape 60 de choix du type d'opération, c'est-à-dire du sens de rotation : vissage ou dévissage. Ce choix est effectué grâce à un bouton à deux positions placé sur la clé à choc.

Le procédé comprend une étape 61 de choix de la puissance selon laquelle l'opérateur souhaite réaliser l'opération de vissage-dévissage.

Le procédé comprend une étape 62 de choix de la loi.

Le choix de la puissance et de la loi est effectué grâce à une interface homme machine (IHM) placée sur la clé à choc. Cette interface peut comporter un écran tactile (ou un dispositif externe communiquant avec la clé à choc par onde radio ou par liaison filaire) permettant à l'utilisateur de circuler dans les menus de choix.

Pour lancer une étape 6 de vissage ou de dévissage, l'opérateur actionne la gâchette (étape 63) et la maintient en position marche.

Tout pendant que l'opérateur maintient la gâchette en position marche ou que la durée d'actionnement objectif n'est pas atteinte ou que le couple objectif n'est pas atteint ou que le nombre d'impacts objectif n'est pas atteint (étape 64), le moteur est alimenté en permanence et dans le sens du travail (vissage ou dévissage selon l'opération réalisée) y compris pendant le rebond du mécanisme d'impact et donc du rotor. Dans le cas où le vissage comprend plusieurs phases successives, le moteur pourra ne pas être alimenté entre deux phases successives.

Lorsque l'opérateur relâche la gâchette ou que la durée d'actionnement objectif est atteinte ou que le couple objectif est atteint ou que le nombre d'impacts objectif est atteint, l'opération de vissage-dévissage prend fin (étape 67).

Le procédé comprend, au cours de l'étape de vissage ou de dévissage 6, une étape 65 de détermination d'une consigne de courant d'alimentation du moteur et une étape 66 d'alimentation du moteur, en fonction de cette consigne, avec un courant d'alimentation , induisant la génération par le moteur d'un couple électromagnétique prédéterminée.

La consigne de courant d'alimentation induisant la génération par le moteur d'un couple électromagnétique est prédéterminée en fonction du temps et est déterminée en fonction du type d'opération (vissage ou dévissage), de la puissance et de la loi choisies.

La consigne de courant d'alimentation est configurée pour induire une évolution du couple électromagnétique prédéterminé selon l'une des lois d'alimentation suivantes :
- couple électromagnétique variant de manière croissante pour un vissage suivant une fonction linéaire ou polynomiale prédéterminée en fonction du temps tout au long de l'étape ou décroissante pour un dévissage,
- couple électromagnétique constant tout au long l'étape de vissage ou de dévissage,
- l'étape de vissage ou de dévissage comprend au moins deux phases de durée prédéterminées, la consigne de courant d'alimentation étant configurée pour qu'aucun couple électromagnétique ne soit délivré par le moteur entre les au moins deux phases et pour induire une évolution du couple électromagnétique prédéterminé selon l'une des lois précédentes au cours des phases.

De manière plus précise, dès que l'opérateur appuie sur la gâchette les moyens de contrôle de l'alimentation du moteur calculent en temps réel et suivant une fréquence prédéterminée la consigne de courant d'alimentation. Ce calcul prend en compte:
- le type d'opération : vissage ou dévissage
- la valeur de la consigne de base de courant d'alimentation que la loi choisie propose à l'instant de la détermination. Cet instant est mesuré à partir du début de l'appuie sur la gâchette.
- la puissance souhaitée, ce niveau de puissance correspond à un facteur multiplicatif qui est appliqué à la valeur de la consigne de courant d'alimentation définie par la loi d'alimentation.

La valeur de la consigne de courant d'alimentation calculée est fournie en temps réel et suivant une fréquence prédéterminée au régulateur 161. Le régulateur calcule en temps réel une consigne de tension d'alimentation notamment en fonction de la consigne de courant d'alimentation.

Le régulateur peut également tenir compte d'autres paramètres pour déterminer la consigne de courant d'alimentation du moteur comme par exemple la position angulaire du rotor par rapport au stator du moteur, le ou les courants d'alimentation du moteur délivrés par l'onduleur au moteur.

La consigne de tension d'alimentation permet de piloter l'onduleur 160 de sorte qu'il alimente le moteur avec un courant d'alimentation induisant la génération par le moteur d'un couple électromagnétique prédéterminé.

Le régulateur se charge de faire en sorte que le courant consommé par le moteur soit au plus proche de la consigne de courant d'alimentation calculée et ceci pendant la durée totale de l'opération de vissage ou dévissage.

Ainsi qu'il a été dit plus haut les différents types de commande envisagés, commande vectorielle et BLDC, appartiennent à l'état de l'art et leur fonctionnement ne sera pas plus détaillé.

Ainsi alimenté, le moteur entraine en rotation le mécanisme d'impact qui transmet des impulsions de couple successives à l'organe terminal rotatif pour entrainer le vissage ou le dévissage de l'élément à serrer ou desserrer.

Consécutivement à chaque impulsion de couple, le rotor rebondit dans le sens inverse du travail en cours selon le fonctionnement classique d'un mécanisme d'impact de type rebondissant. Le moteur étant régulé en courant et non en vitesse, les rebonds du moteur n'ont pas d'effet particulier sur le courant consommé par le moteur et ne sont donc pas pris en considération pour son pilotage.

Ainsi que cela vient d'être expliqué, selon l'invention, le moteur est alimenté dans le sens du travail (sens vissage si l'opération réalisée est un vissage, sens dévissage si l'opération réalisée est un dévissage) en permanence, tout au long d'une opération de vissage/dévissage, i.e. y compris pendant le rebond du rotor.

Le moteur est régulé non pas en vitesse mais en intensité prédéterminée (i.e. en courant) de sorte qu'il délivre un couple électromagnétique prédéterminé.

Ainsi, lors des phases de rebond du rotor, la régulation n'augmente pas l'intensité du courant d'alimentation du moteur, ainsi il n'est pas nécessaire de couper cette alimentation contrairement à l'art antérieur.

De ce fait, le moteur a un comportement proche d'un moteur pneumatique qui est alimenté en air comprimé en permanence et fournit de ce fait un couple sensiblement constant.

Un courant stable ou progressif (et donc un couple électromagnétique stable ou progressif) oppose donc à l'opérateur un couple de réaction sur le corps de l'outil stable ou progressif ce qui réduit très fortement les vibrations ressenties et améliore le confort de l'opérateur.

La technique selon l'invention permet ainsi non seulement de préserver le système en alimentant en permanence le moteur et en évitant une montée de l'intensité d'alimentation, elle permet également d'améliorer l'ergonomie de la clé à choc.

## Revendications

1. Clé à choc comprenant :
- un moteur électrique comprenant un rotor et un stator ;
- un mécanisme d'impact de type rebondissant ;
- des moyens de contrôle de l'alimentation dudit moteur comprenant des moyens de régulation du courant d'alimentation dudit moteur;
ledit rotor dudit moteur étant relié directement audit mécanisme d'impact, **caractérisé en ce que** lesdits moyens de contrôle de l'alimentation dudit moteur sont configurés pour délivrer auxdits moyens de régulation, au cours d'une opération de vissage ou de dévissage, une consigne de courant d'alimentation du moteur induisant la génération par ledit moteur d'un couple électromagnétique prédéterminé,
et **en ce que** lesdits moyens de contrôle de l'alimentation dudit moteur sont configurés pour alimenter ledit moteur dans le sens du travail y compris au cours du rebond du mécanisme d'impact rebondissant,
ledit moteur étant un moteur multi-phases synchrones à aimants permanents et lesdits moyens de contrôle de l'alimentation dudit moteur utilisant une commande de type vectorielle.

2. Clé à choc selon la revendication 1 dans laquelle lesdits moyens de régulation comprennent un régulateur (161) et un onduleur (160) relié à une source de tension continue (15), ledit régulateur comprenant une entrée apte à recevoir une consigne Ref d de courant d'alimentation, ladite consigne de courant Ref d générant un flux dans ledit moteur, et une entrée apte à recevoir une consigne Ref q de courant d'alimentation induisant la génération par ledit moteur d'un couple électromagnétique.

3. Clé à choc selon la revendication 2 dans laquelle ladite consigne Ref d étant nulle.

4. Clé à choc selon la revendication 2 ou 3 dans laquelle lesdits moyens de contrôle de l'alimentation dudit moteur comprennent des moyens de détermination de ladite consigne de courant d'alimentation en temps réel.

5. Clé à choc selon l'une quelconque des revendications 2 à 4 dans laquelle ledit onduleur comprend une Modulation de Largeur d'impulsion (MLI).

6. Clé à choc selon l'une quelconque des revendications 2 à 5 comprenant des moyens de mesure de la position angulaire dudit rotor et des moyens de mesure (163) de courant(s) échangé(s) entre ledit moteur (11) et ledit onduleur (160), ledit régulateur (161) étant configuré pour :
- recevoir ladite consigne de courant d'alimentation prédéterminée, le signal représentatif de la position angulaire dudit rotor provenant des moyens de mesure (162) de la position angulaire dudit rotor et le ou les signaux provenant desdits moyens de mesure (163) de courant(s) échangé(s) entre ledit onduleur (160) et le moteur (11),
- calculer une consigne de tension d'alimentation ;
- délivrer ladite consigne de tension d'alimentation audit l'onduleur (160) de manière telle que ce dernier alimente le moteur (11) avec des courants permettant la génération dudit couple électromagnétique proportionnel à ladite consigne de courant d'alimentation prédéterminée.

7. Clé à choc selon l'une quelconque des revendications 1 à 6 dans laquelle ladite consigne de courant d'alimentation induisant la génération par ledit moteur d'un couple électromagnétique est prédéterminée en fonction du temps.

8. Clé à choc selon la revendication 7 dans laquelle ladite consigne de courant d'alimentation est configurée pour induire une évolution dudit couple électromagnétique prédéterminé selon l'une des lois suivantes :
- couple électromagnétique variant de manière croissante ou décroissante suivant une fonction linéaire ou polynomiale prédéterminée en fonction du temps tout au long de ladite opération de vissage ou de dévissage,
- couple électromagnétique constant tout au long de ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

9. Clé à choc selon la revendication 7 dans laquelle ladite consigne de courant d'alimentation est configurée pour induire une évolution dudit couple électromagnétique prédéterminé selon l'une ou la combinaison de plusieurs des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long de ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

10. Clé à choc selon l'une quelconque des revendications 4 à 9 comprenant une gâchette de démarrage et dans laquelle lesdits moyens de détermination de ladite consigne de courant d'alimentation en temps réel comprennent des moyens de mesure du temps écoulé depuis l'appui sur ladite gâchette de démarrage.

11. Clé à choc selon la revendication 8 ou 9 et l'une quelconque des revendications 5 à 6 comprenant des moyens de sélection par l'utilisateur :
- du sens de travail de la clé à choc en vissage ou dévissage ;
- de la loi ;
- du niveau de puissance.

12. Clé à choc selon les revendications 10 et 11 dans laquelle lesdits moyens de détermination de ladite consigne de courant d'alimentation en temps réel utilisent :
- une mesure du temps écoulé depuis l'appui sur la gâchette ;
- le type de travail sélectionné par l'utilisateur : vissage ou dévissage ;
- la loi sélectionnée par l'utilisateur ;
- le niveau de puissance sélectionné par l'utilisateur.

13. Procédé de vissage/dévissage au moyen d'une clé à choc à moteur électrique selon l'une quelconque des revendications 1 à 12 comprenant une étape de vissage ou de dévissage, ladite étape (6) de vissage ou de dévissage comprenant une étape de contrôle de l'alimentation dudit moteur de type à commande vectorielle comprenant une étape de délivrance auxdits moyens de régulation d'une consigne de courant d'alimentation induisant la génération par ledit moteur d'un couple électromagnétique prédéterminé, ledit moteur étant alimenté dans le sens du travail y compris au cours du rebond du mécanisme d'impact rebondissant.

14. Procédé selon la revendication 13 dans lequel ladite consigne de courant comprend une consigne Ref d de courant d'alimentation générant un flux dans ledit moteur, et une consigne Ref q de courant d'alimentation induisant la génération par ledit moteur d'un couple électromagnétique.

15. Procédé selon la revendication 14 dans lequel ladite consigne Ref d est nulle.

16. Procédé selon l'une quelconque des revendications 13 à 15 dans lequel ladite étape de contrôle de l'alimentation comprend une Modulation de Largeur d'Impulsion (M LI).

17. Procédé selon l'une quelconque des revendications 13 à 16 comprenant une étape de détermination de ladite consigne de courant d'alimentation en temps réel.

18. Procédé selon l'une quelconque des revendications 13 à 17, ladite clé à choc comprenant des moyens de régulation comprenant un régulateur (161) et un onduleur (160) relié à une source de tension continue (15), ledit procédé comprenant une mesure de la position angulaire dudit rotor et une mesure (163) de courant(s) échangé(s) entre ledit moteur (11) et ledit onduleur (160), ledit procédé comprenant :
- la réception par ledit onduleur de ladite consigne de courant d'alimentation prédéterminée, du signal représentatif de la position angulaire dudit rotor et le ou les signaux représentatifs de courant(s) échangé(s) entre ledit onduleur (160) et le moteur (11),
- le calcul d'une consigne de tension d'alimentation ;
- la délivrance de ladite consigne de tension d'alimentation audit l'onduleur (160) de manière telle que ce dernier alimente le moteur (11) avec des courants permettant la génération dudit couple électromagnétique proportionnel à ladite consigne de courant d'alimentation prédéterminée.

19. Procédé selon l'une quelconque des revendications 13 à 18 dans lequel ladite consigne de courant d'alimentation induisant la génération par ledit moteur d'un couple électromagnétique est prédéterminée en fonction du temps.

20. Procédé selon la revendication 19 dans laquelle ladite consigne de courant d'alimentation est configurée pour induire une évolution dudit couple électromagnétique prédéterminé selon l'une des lois suivantes :
- couple électromagnétique variant de manière croissante ou décroissante suivant une fonction linéaire ou polynomiale prédéterminée en fonction du temps tout au long de ladite opération de vissage ou de dévissage,
- couple électromagnétique constant tout au long de ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

21. Procédé selon l'une quelconque des revendications 13 à 20 dans laquelle ladite consigne de courant d'alimentation est configurée pour induire une évolution dudit couple électromagnétique prédéterminé selon l'une ou la combinaison de plusieurs des lois suivantes :
- couple électromagnétique variant de manière croissante ou décroissante suivant une fonction linéaire ou polynomiale ou exponentielle prédéterminée en fonction du temps tout au long de ladite opération de vissage ou de dévissage,
- couple électromagnétique constant tout au long de ladite opération de vissage ou de dévissage,
- ladite opération de vissage ou de dévissage comprend au moins deux phases de durées prédéterminées, ladite consigne de courant d'alimentation étant configurée pour qu'aucun couple électromagnétique ne soit délivré par ledit moteur entre lesdites au moins deux phases, ceci pendant une durée prédéterminée, et pour induire une évolution dudit couple électromagnétique prédéterminé selon l'une des lois précédentes au cours desdites phases.

22. Procédé selon l'une quelconque des revendications 13 à 21 comprenant une étape de mesure du temps écoulé depuis l'appui sur la gâchette de démarrage de ladite clé à choc.

23. Procédé selon l'une quelconque des revendications 13 à 22 comprenant une étape de sélection par l'utilisateur :
- du sens de travail de la clé à choc en vissage ou dévissage ;
- de la loi;
- du niveau de puissance.

24. Procédé selon les revendications 22 et 23 comprenant une étape de détermination de ladite consigne de courant d'alimentation en temps réel en tenant compte :
- de la mesure du temps écoulé depuis l'appui sur la gâchette ;
- du type de travail sélectionné par l'utilisateur, vissage ou dévissage ;
- de la loi sélectionnée par l'utilisateur ;
- du niveau de puissance sélectionné par l'utilisateur.

## Patentansprüche

1. Schlagschrauber, umfassend:
- einen Elektromotor, umfassend einen Rotor und einen Stator;
- einen Schlagvorrichtung zurückprallenden Typs;
- Mittel zur Steuerung der Versorgung des Motors, umfassend Mittel zur Regulierung des Versorgungsstroms des Motors;
wobei der Rotor des Motors direkt mit dem Impulsmechanismus verbunden ist, **dadurch gekennzeichnet, dass** die Mittel zur Steuerung der Versorgung des Motors eingerichtet sind, um an die Mittel zur Regulierung während eines Anschraub- oder Losschraubvorgangs einen Versorgungsstromsollwert des Motors zu liefern, der zur Erzeugung eines vorbestimmten elektromagnetischen Moments durch den Motor führt, und dass die Mittel zur Steuerung der Versorgung des Motors eingerichtet sind, um den Motor in die Richtung der Arbeit inklusive während des Zurückprallens des zurückprallenden Schlagvorrichtung zu versorgen, wobei der Motor ein Mehrphasen-Synchronmotor mit Dauermagneten ist, und wobei die Mittel zur Steuerung der Versorgung des Motors eine Steuerung vektoriellen Typs verwenden.

2. Schlagschrauber nach Anspruch 1, bei dem die Mittel zur Regulierung einen Regulator (161) und einen Wechselrichter (160), der mit einer Gleichspannungsquelle (15) verbunden ist, umfassen, wobei der Regulator einen Eingang, der geeignet ist, einen Sollwert Ref d eines Versorgungsstroms zu empfangen, wobei der Sollwert Ref d einen Fluss im Motor erzeugt, und einen Eingang umfasst, der geeignet ist einen Sollwert Ref q eines Versorgungsstroms zu empfangen, der zur Erzeugung eines elektromagnetischen Moments durch den Motor führt.

3. Schlagschrauber nach Anspruch 2, bei dem der Sollwert Ref d gleich Null ist.

4. Schlagschrauber nach Anspruch 2 oder 3, bei dem die Mittel zur Steuerung der Versorgung des Motors Mittel zur Bestimmung des Versorgungsstromsollwert in Echtzeit umfassen.

5. Schlagschrauber nach einem der Ansprüche 2 bis 4, bei dem der Wechselrichter eine Pulsweitenmodulation (PWM) umfasst.

6. Schlagschrauber nach einem der Ansprüche 2 bis 5, umfassend Mittel zum Messen der Winkelposition des Rotors und Mittel zum Messen (163) von Strom, der zwischen dem Motor (11) und dem Wechselrichter (160) ausgetauscht wird, wobei der Regulator (161) eingerichtet ist, um:
- den vorbestimmten Versorgungsstromsollwert zu empfangen, wobei das für die Winkelposition des Rotors repräsentative Signal von den Mitteln zum Messen (162) der Winkelposition des Rotors kommt, und das oder die Signale von den Mitteln zum Messen (163) von Strom, der zwischen dem Wechselrichter (160) und dem Motor (11) ausgetauscht wird, kommt(en),
- einen Versorgungsspannungssollwert zu berechnen;
- den Versorgungsspannungssollwert an den Wechselrichter (160) zu liefern, so dass dieser letztgenannte den Motor (11) mit Strömen versorgt, der die Erzeugung des elektromagnetischen Moments proportional zu dem vorbestimmten Versorgungsstromsollwert ermöglicht.

7. Schlagschrauber nach einem der Ansprüche 1 bis 6, bei dem der Versorgungsstromsollwert, der zur Erzeugung eines elektromagnetischen Moments durch den Motor führt, in Abhängigkeit von der Zeit vorbestimmt wird.

8. Schlagschrauber nach Anspruch 7, bei dem der Versorgungsstromsollwert eingerichtet ist, um zu einer Weiterentwicklung des vorbestimmten elektromagnetischen Moments nach einem der folgenden Gesetze zu führen:
- elektromagnetisches Moment, das aufsteigend oder absteigend nach einer vorbestimmten linearen oder polynominalen Funktion in Abhängigkeit von der Zeit während des gesamten Vorgangs des Anschraubens oder Losschraubens variiert,
- konstantes elektromagnetisches Moment während des gesamten Vorgangs des Anschraubens oder Losschraubens,
- der Vorgang des Anschraubens oder Losschraubens umfasst mindestens zwei Phasen vorbestimmter Dauer, wobei der Versorgungsstromsollwert derart vorgesehen ist, dass kein elektromagnetisches Moment vom Motor zwischen den mindestens zwei Phasen geliefert wird, und zwar während einer vorbestimmten Dauer, und dass eine Weiterentwicklung des vorbestimmten elektromagnetischen Moments nach einem der vorherigen Gesetze während der Phasen eingeleitet wird.

9. Schlagschrauber nach Anspruch 7, bei dem der Versorgungsstromsollwert eingerichtet ist, um eine Weiterentwicklung des vorbestimmten elektromagnetischen Moments nach dem einen oder der Kombination von mehreren der folgenden Gesetze einzuleiten:
- elektromagnetisches Moment, das aufsteigend oder absteigend nach einer vorbestimmten linearen oder polynominalen oder exponentiellen Funktion in Abhängigkeit von der Zeit während des gesamten Vorgangs des Anschraubens oder Losschraubens variiert,
- konstantes elektromagnetisches Moment während des gesamten Vorgangs des Anschraubens oder Losschraubens,
- der Vorgang des Anschraubens oder Losschraubens umfasst mindestens zwei Phasen vorbestimmter Dauer, wobei der Versorgungsstromsollwert derart vorgesehen ist, dass kein elektromagnetisches Moment vom Motor zwischen den mindestens zwei Phasen geliefert wird, und zwar während einer vorbestimmten Dauer, und dass eine Weiterentwicklung des vorbestimmten elektromagnetischen Moments nach einem der vorherigen Gesetze während der Phasen eingeleitet wird.

10. Schlagschrauber nach einem der Ansprüche 4 bis 9, umfassend einen Auslöser, und die Mittel zur Bestimmung des Versorgungsstromsollwerts in Echtzeit umfassen Mittel zum Messen der Zeit, die seit dem Drücken auf den Auslöser vergangen ist.

11. Schlagschrauber nach Anspruch 8 oder 9 und einem der Ansprüche 5 bis 6, umfassend Mittel zur Auswahl durch den Benutzer:
- der Arbeitsrichtung des Schlagschraubers beim Anschrauben oder Losschrauben;
- des Gesetzes;
- des Leistungsniveaus.

12. Schlagschrauber nach den Ansprüchen 10 und 11, bei dem die Mittel zur Bestimmung des Versorgungsstromsollwerts in Echtzeit verwenden:
- ein Messen der vom Drücken auf den Auslöser vergangenen Zeit;
- den vom Benutzer ausgewählten Arbeitstyp: Anschrauben oder Losschrauben;
- das vom Benutzer ausgewählte Gesetz;
- das vom Benutzer ausgewählte Leistungsniveau.

13. Verfahren zum Anschrauben/Losschrauben mit Hilfe eines Schlagschraubers mit Elektromotor nach einem der vorhergehenden Anspruch 1 bis 12, umfassend einen Schritt des Anschraubens oder Losschraubens, wobei der Schritt (6) des Anschraubens oder Losschraubens einen Schritt der Steuerung der Versorgung des Motors des Typs mit vektorieller Steuerung umfasst, umfassend einen Schritt der Lieferung eines Versorgungsstromsollwerts an die Mittel zur Regulierung, der zur Erzeugung eines vorbestimmten elektromagnetischen Moments durch den Motor führt, wobei der Motor in Arbeitsrichtung inklusive während des Zurückprallens des zurückprallenden Schlagvorrichtung versorgt wird.

14. Verfahren nach Anspruch 13, bei dem der Stromsollwert einen Sollwert Ref d eines Versorgungsstroms, der einen Fluss im Motor erzeugt, und einen Sollwert Ref q eines Versorgungsstroms, der zur Erzeugung eines elektromagnetischen Moments durch den Motor führt, umfasst.

15. Verfahren nach Anspruch 14, bei dem der Sollwert Ref d gleich Null ist.

16. Verfahren nach einem der Ansprüche 13 bis 15, bei dem der Schritt der Steuerung der Versorgung eine Pulsweitenmodulation (PWM) umfasst.

17. Verfahren nach einem der Ansprüche 13 bis 16, umfassend einen Schritt der Bestimmung des Versorgungsstromsollwerts in Echtzeit.

18. Verfahren nach einem der Ansprüche 13 bis 17, wobei der Schlagschrauber Mittel zur Regulierung umfasst, die einen Regulator (161) und einen Wechselrichter (160) umfasst, der an eine Gleichspannungsquelle (15) angeschlossen ist, wobei das Verfahren ein Messen der Winkelposition des Rotors und ein Messen (163) von zwischen dem Motor (11) und dem Wechselrichter (160) ausgetauschtem Strom umfasst, wobei das Verfahren umfasst:
- das Empfangen des vorbestimmten Versorgungsstromsollwerts durch den Wechselrichter des für die Winkelposition des Rotors repräsentativen Signals und des oder der Signale, die für den Strom repräsentativ ist(sind), der zwischen dem Wechselrichter (160) und dem Motor (11) ausgetauscht wird,
- das Berechnen eines Versorgungsspannungssollwerts;
- das Liefern des Versorgungsspannungssollwerts an den Wechselrichter (160), so dass dieser letztgenannte den Motor (11) mit Strom versorgt, der die Erzeugung des elektromagnetischen Moments proportional zu dem vorbestimmten Versorgungsstromsollwert ermöglicht.

19. Verfahren nach einem der Ansprüche 13 bis 18, bei dem der Versorgungsstromsollwert, der zur Erzeugung eines elektromagnetischen Moments durch den Motor führt, in Abhängigkeit von der Zeit vorbestimmt wird.

20. Verfahren nach Anspruch 19, bei dem der Versorgungsstromsollwert eingerichtet ist, um zu einer Weiterentwicklung des vorbestimmten elektromagnetischen Moments nach einem der folgenden Gesetze zu führen:
- elektromagnetisches Moment, das aufsteigend oder absteigend nach einer vorbestimmten linearen oder polynominalen Funktion in Abhängigkeit von der Zeit während des gesamten Vorgangs des Anschraubens oder Losschraubens variiert,
- konstantes elektromagnetisches Moment während des gesamten Vorgangs des Anschraubens oder Losschraubens,
- der Vorgang des Anschraubens oder Losschraubens umfasst mindestens zwei Phasen vorbestimmter Dauer, wobei der Versorgungsstromsollwert derart vorgesehen ist, dass kein elektromagnetisches Moment vom Motor zwischen den mindestens zwei Phasen geliefert wird, und zwar während einer vorbestimmten Dauer, und dass eine Weiterentwicklung des vorbestimmten elektromagnetischen Moments nach einem der vorherigen Gesetze während der Phasen eingeleitet wird.

21. Verfahren nach einem der Ansprüche 13 bis 20, bei dem der Versorgungsstromsollwert eingerichtet ist, um eine Weiterentwicklung des vorbestimmten elektromagnetischen Moments nach dem einen oder der Kombination von mehreren der folgenden Gesetze einzuleiten:
- elektromagnetisches Moment, das aufsteigend oder absteigend nach einer vorbestimmten linearen oder polynominalen oder exponentiellen Funktion in Abhängigkeit von der Zeit während des gesamten Vorgangs des Anschraubens oder Losschraubens variiert,
- konstantes elektromagnetisches Moment während des gesamten Vorgangs des Anschraubens oder Losschraubens,
- der Vorgang des Anschraubens oder Losschraubens umfasst mindestens zwei Phasen vorbestimmter Dauer, wobei der Versorgungsstromsollwert derart vorgesehen ist, dass kein elektromagnetisches Moment vom Motor zwischen den mindestens zwei Phasen geliefert wird, und zwar während einer vorbestimmten Dauer, und dass eine Weiterentwicklung des vorbestimmten elektromagnetischen Moments nach einem der vorherigen Gesetze während der Phasen eingeleitet wird.

22. Verfahren nach einem der Ansprüche 13 bis 21, umfassend einen Schritt des Messens der Zeit, die seit dem Drücken auf den Auslöser vergangen ist.

23. Verfahren nach einem der Ansprüche 13 bis 22, umfassend einen Schritt der Auswahl durch den Benutzer:
- der Arbeitsrichtung des Schlagschraubers beim Anschrauben oder Losschrauben;
- des Gesetzes;
- des Leistungsniveaus.

24. Verfahren nach den Ansprüchen 22 und 23, umfassend einen Schritt der Bestimmung des Versorgungsstromsollwerts in Echtzeit, der berücksichtigt:
- das Messen der vom Drücken auf den Auslöser vergangenen Zeit;
- den vom Benutzer ausgewählten Arbeitstyp: Anschrauben oder Losschrauben;
- das vom Benutzer ausgewählte Gesetz;
- das vom Benutzer ausgewählte Leistungsniveau.

## Claims

1. A shock key comprising:
- an electric motor comprising a rotor and a stator;
- a rebound type impact mechanism
- means for controlling the power supply of said motor comprising means for regulating the power supply current of said motor;
said rotor of said motor being directly linked to said impact mechanism,
**characterised in that** said means for controlling the power supply of said motor are configured to output to said means for regulating, during a screwing or unscrewing operation, a setpoint of power supply current of the motor inducing the generation of a predetermined electromagnetic torque by said motor,
and **in that** said means for controlling the power supply of said motor are configured to power said motor in the working direction including during the rebound of the rebound impact mechanism,
said motor being a multi-phase permanent magnet synchronous motor and said means for controlling the power supply of said motor using a vector-type control.

2. Shock key according to claim 1, wherein said means for regulating comprise a regulator (161) and an inverter (160) connected to a direct voltage source (15), said regulator comprising an input able to receive a power supply current setpoint Ref d, said current setpoint Ref d generating a flux in said motor, and an input able to receive a power supply current setpoint Ref q inducing the generation of an electromagnetic torque by said motor.

3. Shock key according to claim 2, wherein said setpoint Ref d being zero.

4. Shock key according to claim 2 or 3, wherein said means for controlling the power supply of said motor comprise means for determining said power supply current setpoint in real-time.

5. Shock key according to any one of claims 2 to 4, wherein said inverter comprises a Pulse-Width Modulation (PWM) .

6. Shock key according to any one of claims 2 to 5, comprising means for measuring the angular position of said rotor and means (163) for measuring current(s) exchanged between said motor (11) and said inverter (160), said regulator (161) being configured to:
- receive said predetermined power supply current setpoint, the signal representative of the angular position of said rotor originating from the means (162) for measuring the angular position of said rotor and the signal(s) originating from said means (163) for measuring current(s) exchanged between said inverter (160) and the motor (11),
- calculate a power supply voltage setpoint;
- output said power supply voltage setpoint to said inverter (160) such that the latter powers the motor (11) with currents enabling the generation of said electromagnetic torque proportional to said predetermined power supply current setpoint.

7. Shock key according to any one of claims 1 to 6, wherein said power supply current setpoint inducing the generation of an electromagnetic torque by said motor is predetermined as a function of time.

8. Shock key according to claim 7, wherein said power supply current setpoint is configured to induce an evolution of said predetermined electromagnetic torque according to one of the following laws:
- electromagnetic torque varying increasingly or decreasingly, according to a predetermined linear or polynomial function, as a function of time throughout said screwing or unscrewing operation,
- constant electromagnetic torque throughout said screwing or unscrewing operation,
- said screwing or unscrewing operation comprises at least two phases with predetermined durations, said power supply current setpoint being configured so that no electromagnetic torque is output by said motor between said at least two phases, that being so over a predetermined duration, and to induce an evolution of said predetermined electromagnetic torque according to one of the previous laws during said phases.

9. Shock key according to claim 7, wherein said power supply current setpoint is configured to induce an evolution of said predetermined electromagnetic torque according to one or the combination of several of the following laws:
- electromagnetic torque varying increasingly or decreasingly according to a predetermined linear or polynomial or exponential function as a function of time throughout said screwing or unscrewing operation,
- constant electromagnetic torque throughout said screwing or unscrewing operation,
- said screwing or unscrewing operation comprises at least two phases with predetermined durations, said power supply current setpoint being configured so that no electromagnetic torque is output by said motor between said at least two phases, that being so over a predetermined duration, and to induce an evolution of said predetermined electromagnetic torque according to one of the previous laws during said phases.

10. Shock key according to any one of claims 4 to 9, comprising a start trigger and wherein said means for determining said power supply current setpoint in real-time comprise means for measuring the time elapsed since pulling said start trigger.

11. Shock key according to claim 8 or 9 and any one of claims 5 to 6, comprising means for the user selecting:
- the working direction of the shock key in screwing or unscrewing;
- the law;
- the power level.

12. Shock key according to claims 10 and 11, wherein said means for determining said power supply current setpoint in real-time use:
- a measurement of the time elapsed since pulling the trigger;
- the work type selected by the user: screwing or unscrewing;
- the law selected by the user;
- the power level selected by the user.

13. Method for screwing/unscrewing by means of a shock key with an electric motor according to any one of claims 1 to 12, comprising a step of screwing or unscrewing, said screwing or unscrewing step (6) comprising a step of controlling the power supply of said motor of the vector control type comprising a step of outputting to said means for regulating a power supply current setpoint inducing the generation of a predetermined electromagnetic torque by said motor, said motor being powered in the working direction including during the rebound of the rebound impact mechanism.

14. Method according to claim 13, wherein said current setpoint comprises a power supply current setpoint Ref d generating a flux in said motor, and a power supply current setpoint Ref q inducing the generation of an electromagnetic torque by said motor.

15. Method according to claim 14, wherein said setpoint Ref d is zero.

16. Method according to any one of claims 13 to 15, wherein said step of controlling the power supply comprises a Pulse-Width Modulation (PWM).

17. Method according to any one of claims 13 to 16, comprising a step of determining said power supply current setpoint in real-time.

18. Method according to any one of claims 13 to 17, said shock key comprising means for regulating comprising a regulator (161) and an inverter (160) connected to a direct voltage source (15), said method comprising measuring the angular position of said rotor and measuring (163) current(s) exchanged between said motor (11) and said inverter (160), said method comprising:
- receiving by said inverter said predetermined power supply current setpoint, the signal representative of the angular position of said rotor and the signal(s) representative of the current(s) exchanged between said inverter (160) and the motor (11),
- calculating a power supply voltage setpoint;
- outputting said power supply voltage setpoint to said inverter (160) such that the latter powers the motor (11) with currents enabling the generation of said electromagnetic torque proportional to said predetermined power supply current setpoint.

19. Method according to any one of claims 13 to 18, wherein said power supply current setpoint inducing the generation of an electromagnetic torque by said motor is predetermined as a function of time.

20. Method according to claim 19, wherein said power supply current setpoint is configured to induce an evolution of said predetermined electromagnetic torque according to one of the following laws:
- electromagnetic torque varying increasingly or decreasingly, according to a predetermined linear or polynomial function, as a function of time throughout said screwing or unscrewing operation,
- constant electromagnetic torque throughout said screwing or unscrewing operation,
- said screwing or unscrewing operation comprises at least two phases with predetermined durations, said power supply current setpoint being configured so that no electromagnetic torque is output by said motor between said at least two phases, that being so over a predetermined duration, and to induce an evolution of said predetermined electromagnetic torque according to one of the previous laws during said phases.

21. Method according to any one of claims 13 to 20, wherein said power supply current setpoint is configured to induce an evolution of said predetermined electromagnetic torque according to one or the combination of several of the following laws:
- electromagnetic torque varying increasingly or decreasingly according to a predetermined linear or polynomial or exponential function as a function of time throughout said screwing or unscrewing operation,
- constant electromagnetic torque throughout said screwing or unscrewing operation,
- said screwing or unscrewing operation comprises at least two phases with predetermined durations, said power supply current setpoint being configured so that no electromagnetic torque is output by said motor between said at least two phases, that being so over a predetermined duration, and to induce an evolution of said predetermined electromagnetic torque according to one of the previous laws during said phases.

22. Method according to any one of claims 13 to 21, comprising a step of measuring the time elapsed since pulling the start trigger of said shock key.

23. Method according to any one of claims 13 to 22, comprising a step of the user selecting:
- the working direction of the shock key in screwing or unscrewing;
- the law;
- the power level.

24. Method according to claims 22 and 23, comprising a step of determining said power supply current setpoint in real-time while taking into account:
- the measurement of the time elapsed since pulling the trigger;
- the work type selected by the user, screwing or unscrewing;
- the law selected by the user;
- the power level selected by the user.
